# FASCICULE DE BREVET EUROPEEN

(11) **EP 2 586 175 B1**
(45) Date de publication et mention de la délivrance du brevet: **09.04.2014**
(21) Numéro de dépôt: 11738763.9
(22) Date de dépôt: 28.06.2011
(51) Int. Cl.: H04L 29/06, G06F 21/00

(54) **PROCÉDÉ ET DISPOSITIF DE VÉRIFICATION DE RECONNAISSANCE PHYSIQUE ENTRE UN APPELANT ET UN APPELÉ**
VERFAHREN UND VORRICHTUNG ZUR ÜBERPRÜFUNG DER PHYSISCHEN ERKENNUNG ZWISCHEN EINEM ANRUFER UND EINEM ANGERUFENEN
METHOD AND DEVICE FOR VERIFYING PHYSICAL RECOGNITION BETWEEN A CALLER AND A CALLED PARTY

(30) Priorité: 28.06.2010 FR 1055177
(43) Date de publication de la demande: 01.05.2013
(73) Titulaire: Sigma Mediterranee, 11000 Carcassonne (FR)
(72) Inventeur: CHAVERNAC, Pascal, F-11000 Carcasonne (FR)
(74) Mandataire: Cornuejols, Georges
(86) Numéro de dépôt international: PCT/FR2011/051503
(87) Numéro de publication internationale: WO 2012/001295

(56) Documents cités:
- EP-A2- 0 866 595
- US-A1- 2007 283 142
- US-A1- 2008 209 223
- Tunji Afonja: "DialByPhoto", , 6 février 2009 (2009-02-06), XP002660784, Extrait de l'Internet: URL:http://www.gx-5.com/products/dialbypho toforiphone/index_full.php [extrait le 2011-10-07] & "DialByPhoto last updated on iTunes", , 6 février 2009 (2009-02-06), Extrait de l'Internet: URL:http://itunes.apple.com/app/dialbyphot o/id302676474?mt=8 [extrait le 2011-10-07]

## Description

La présente invention concerne un procédé et un dispositif de vérification de reconnaissance physique entre un appelant et un appelé. Elle permet une vérification d'existence de contacts personnels antérieurs avant une mise en communication. Cette authentification d'un appelant notamment destinés à la communication audiovisuelle de personnes n'ayant pas de connaissance en informatique et/ou ne disposant pas d'ordinateur. La présente invention concerne aussi un système de contrôle d'identité de mise en relation entre deux personnes physique quel que soit le moyen technique utilisé pour la mise en relation.

Il existe de nombreux systèmes permettant à au moins deux utilisateurs, distants l'un de l'autre, de communiquer et d'échanger au cours d'une conversation vocale, vidéo et/ou textuelle. De nombreux sites Internet ou logiciels de communication sur Internet permettent aux utilisateurs d'ordinateurs d'organiser des vidéoconférences par le biais d'une caméra numérique dite "webcam", d'un microphone ou de périphériques similaires reliés aux ordinateurs de ces utilisateurs. Tous ces services de messagerie instantanée ont l'inconvénient de requérir l'utilisation d'un ordinateur pour chacun des utilisateurs souhaitant communiquer avec un autre utilisateur. Ces techniques de communication ne sont donc pas adaptées aux cas de personnes âgées ou de personnes ayant des difficultés à manier un ordinateur.

Il est également bien connu d'utiliser le réseau téléphonique conventionnel afin de pouvoir réaliser une conversation à la fois vidéo et vocale entre plusieurs utilisateurs. Il suffit dans ce cas aux différents utilisateurs souhaitant participer à la conversation de s'équiper de téléphones relativement sophistiqués comprenant une caméra et un microphone intégrés, et de faire les démarches nécessaires auprès de l'opérateur téléphonique pour pouvoir accéder à ce service.

Un des inconvénients de la vidéoconférence supportée par un réseau de téléphonie est qu'elle entraîne un coût non négligeable pour l'utilisateur appelant, en comparaison avec une vidéoconférence basée sur une technologie Internet.

Dans tout système de communication, il existe aussi le risque que des tiers émettent des messages non sollicités, communément appelés « spams » ou « pourriels » qui, après avoir nuit à l'utilisateur d'une messagerie électronique, commencent à se répandre dans l'utilisation de messages courts (ou « SMS ») et de la téléphonie puis de la visiophonie.

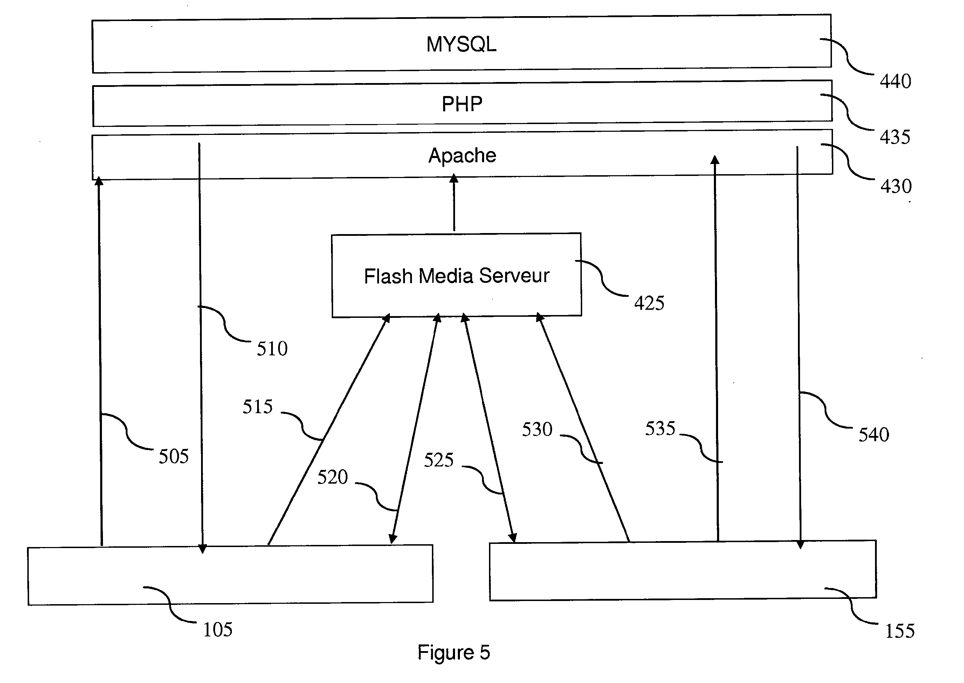

On connaît le document US 2008209223, qui concerne, comme exposé dans son paragraphe 1, la sécurité d'un accès dans un environnement informatique et, plus particulièrement, la génération d'une question de reconnaissance visuelle pour vérifier que l'utilisateur est humain. Ce document vise donc à éviter un accès à une ressource par un système automatique (« robot » ou « bot ») par l'intermédiaire d'internet. Plus précisément, il s'agit d'éviter qu'une reconnaissance optique de caractères puisse lire des glyphs dans un cadre de position connue (voir le paragraphe 39). Dans ce système de sécurité, on présente à l'utilisateur une seule image représentant une séquence de symboles (par exemple un code secret partagé entre l'utilisateur et le serveur d'accès) déformée et dans une position variable sur un décor et on lui demande de reconnaître ces symboles (voir figures 5 à 7, 11 et 14 à 20).

Traditionnellement, l'accès à une ressource ou à une personne est basée sur :
- ce qu'est celui qui tente d'obtenir l'accès :
   - la biométrie est utilisée pour le reconnaître automatiquement, ce qui implique des systèmes complexes, coûteux et peu fiables ou
   - la transmission de son image ou de sa voix est utilisées qu'il soit reconnu par la personne à laquelle l'accès est demandé, ce qui impose de déranger cette personne,
- ce qu'a celui qui tente d'obtenir l'accès, c'est-à-dire un support physique, ou clé, mécanique
   ou électronique ou
- ce que sait celui qui tente d'obtenir l'accès : il doit alors convenir d'un mot de passe avec la personne à laquelle il veut accéder, ce qui impose une mémorisation fastidieuse.

Ainsi, aucune des méthodes d'autorisation d'accès traditionnelle n'est adaptée ni à filtrer les appels entre proches, ni à un usage par des jeunes enfants ou par des personnes âgées ou aux fonctions intellectuelles amoindries.

On connaît le document « DialByPhoto » de Tunji Afonja dont l'URL sur Internet est http://www.gx-5.com/products/dialbyphotoforiphone/index_full.php qui décrit un moyen de sélection d'un interlocuteur sur la base de sa photographie. Ce dispositif ne garantit aucunement que l'utilisateur appelant connaisse, c'est-à-dire soit capable d'identifier physiquement, l'utilisateur appelé. En particulier, ce système autorise le passage d'appels non sollicités par utilisation de numéros de téléphone. De plus, une association, au hasard, de photos à des numéros de téléphone à appeler permet de passer des appels non sollicités. Par exemple, lors d'une campagne de prospection téléphonique, l'absence de relation entre une photo et un numéro de téléphone ne change rien au fonctionnement du système et ne permet pas que les utilisateurs appelés soient protégés de ces appels non sollicités.

La présente invention vise à remédier à tout ou partie de ces inconvénients.

A cet effet, selon un premier aspect, la présente invention vise un procédé tel qu'exposé en revendication 1.

Grâce à ces dispositions, seule une personne connaissant l'appelé, sa photographie ou sa voix, peut l'identifier et ainsi s'authentifier comme appelant légitime.

Dans le mode de réalisation de la présente invention dans lequel on met en oeuvre des images, on présente à l'utilisateur appelant une pluralité de photographies non déformées et, d'un seul clic de souris, cet utilisateur appelant désigne la photographie de l'appelé.

La mise en oeuvre de la présente invention permet à l'appelant d'attester qu'il connaît physiquement l'appelé avant la mise en relation. La présente invention réduit ainsi la croissance des contacts indésirables, des gènes téléphoniques, spams, pourriels et arnaques par quelque moyen de communication qu'il soit utilisé en ne permettant à un appelant de ne pouvoir entrer en contact qu'après avoir été capable d'identifier physiquement l'appelé.

Selon des caractéristiques particulières, l'étape de demande de transmission d'un message comporte une étape de demande d'un mot de passe à l'utilisateur appelant, l'étape de présentation n'étant effectuée que si l'utilisateur appelant ne fournit pas le mot de passe attendu.

Selon des caractéristiques particulières, si le média sélectionné par l'utilisateur appelant est représentatif de l'utilisateur appelé, on fournit un mot de passe à l'utilisateur appelant.

Grâce à chacune de ces dispositions, un utilisateur appelant à qui a été transmis le mot de passe, donc un utilisateur autorisé à appeler par l'utilisateur appelé, peut éviter la procédure de reconnaissance préalable de l'utilisateur appelé.

Selon des caractéristiques particulières, si le média sélectionné par l'utilisateur appelant est représentatif de l'utilisateur appelé, on mémorise une adresse unique de l'utilisateur appelant sur un réseau reliant l'utilisateur appelant à l'utilisateur appelé, l'utilisateur appelant pouvant ensuite effectuer des appels de l'utilisateur appelé en mettant en oeuvre ladite adresse unique sans que les étapes de présentation et de sélection ne soient mises en oeuvre.

L'adresse mémorisée est, par exemple, une adresse IP fixe ou un numéro de ligne téléphonique. Grâce à ces dispositions, l'utilisateur appelant qui a déjà reconnu, antérieurement, l'utilisateur appelé n'a pas besoin de le reconnaître à chaque fois que l'utilisateur appelant essaie de joindre l'utilisateur appelé.

Selon des caractéristiques particulières, chaque adresse unique utilisée par l'utilisateur appelé pour joindre un autre utilisateur est mémorisée, l'utilisateur appelant pouvant ensuite effectuer des appels de l'utilisateur appelé en mettant en oeuvre ladite adresse unique sans que les étapes de présentation et de sélection ne soient mises en oeuvre.

Grâce à ces dispositions, les correspondants que l'utilisateur appelé a essayé de joindre sont automatiquement autorisés à joindre l'utilisateur appelé sans avoir à effectuer une reconnaissance préalable de l'utilisateur appelé.

Selon des caractéristiques particulières, au moins un dit média est une image fixe non déformée après la capture de ladite image, ladite image représentant le visage de l'utilisateur appelé et/ou un objet habituel de son environnement.

Selon des caractéristiques particulières, au moins un dit média est une séquence vidéo non déformée après la capture de ladite séquence, ladite séquence représentant le visage de l'utilisateur appelé et/ou un objet habituel de son environnement.

Grâce à chacune de ces dispositions, une reconnaissance visuelle, donc très rapide, est réalisée.

Selon des caractéristiques particulières, au moins un dit média est un média audio représentant la voix de l'utilisateur appelé, non déformée après la capture de ladite voix.

Grâce à ces dispositions, tout appareil téléphonique peut être mis en oeuvre pour joindre l'utilisateur appelé.

Selon des caractéristiques particulières, le procédé objet de l'invention comporte, en outre, une étape de fourniture dudit média par l'utilisateur appelé.

Grâce à ces dispositions, c'est l'utilisateur appelé qui fournit les images ou enregistrements sonores et/ou visuels qui serviront à le reconnaître.

Selon des caractéristiques particulières, on conserve, en mémoire, une pluralité de médias représentatifs de l'utilisateur appelé et, au cours de l'étape de présentation, si l'utilisateur appelant n'a pas sélectionné le média représentatif de l'utilisateur appelé au cours de la précédente demande transmission de message, le média représentatif de l'utilisateur appelé est un média différent de celui présenté à l'utilisateur appelant au cours de la précédente demande de transmission de message.

Grâce à ces dispositions, ceux qui font des appels non sollicités ne peuvent tirer un enseignement de la précédente tentative qui a échoué.

Selon des caractéristiques particulières, le procédé objet de l'invention comporte, en outre, une étape de tirage, au hasard, d'autres médias dans une base de données pour constituer ladite pluralité de médias présentée au cours de l'étape de présentation.

Grâce à ces dispositions, les médias sont différents pour différents utilisateurs appelés, ce qui limite l'enseignement d'une tentative qui a échoué.

Selon des caractéristiques particulières, l'étape de transmission d'un message comporte on étape de détection de capacité d'affichage d'images par le moyen d'appel utilisé par l'utilisateur appelant et :
- si le moyen d'appel peut afficher des images, au cours de l'étape de présentation, on présente des médias comportant au moins une image et
- si le moyen d'appel ne peut afficher d'image, au cours de l'étape de présentation, on présente des médias audio.

Selon des caractéristiques particulières, au cours de l'étape de détection de capacité d'affichage d'images, on met en oeuvre l'IMEI (International Mobile Equipment Identity, ou « identité internationale d'équipement mobile ») du moyen d'appel utilisé par l'utilisateur appelant.

Grâce à chacune de ces dispositions, on choisit automatiquement le type de média en fonction de la capacité du moyen d'appel.

Selon des caractéristiques particulières, au cas où l'utilisateur appelant ne sélectionne pas le média représentatif de l'utilisateur appelé après un nombre d'essais successifs prédéterminé, l'utilisateur appelant est mis en relation avec une messagerie de l'utilisateur appelé.

Grâce à ces dispositions, l'utilisateur appelant peut laisser un message, même quand il n'est pas autorisé à joindre directement l'utilisateur appelé.

Selon un deuxième aspect, la présente invention vise un dispositif selon la revendication 15.

Les avantages, buts et caractéristiques particulières de ce dispositif étant similaires à ceux du procédé objet de la présente invention, tels que succinctement exposés ci-dessus, ils ne sont pas rappelés ici.

D'autres avantages, buts et caractéristiques de la présente invention ressortiront de la description qui va suivre faite, dans un but explicatif et nullement limitatif en regard des dessins annexés, dans lesquels :
- la figure 1 représente, schématiquement, un boîtier de communication mis en oeuvre dans des modes de réalisation de la présente invention,
- la figure 2 est un schéma fonctionnel mis en oeuvre pour l'installation d'un boîtier, dans des modes de réalisation de la présente invention,
- la figure 3 est un schéma fonctionnel de serveurs mis en oeuvre pour la communication avec un boîtier, dans des modes de réalisation de la présente invention,
- la figure 4 représente, schématiquement, des serveurs mis en oeuvre dans des modes de réalisation de la présente invention,
- les figures 5 et 6 sont des schémas d'échanges de données mis en oeuvre pour la connexion d'un boîtier et d'un terminal informatique distant, dans des modes de réalisation de la présente invention,
- les figures 7 et 8 sont des schémas d'échanges de données mis en oeuvre pour le partage de médias entre un terminal informatique distant et un boîtier, dans des modes de réalisation de la présente invention,
- les figures 9 et 10 sont des schémas d'échanges de données mis en oeuvre pour la transmission de messages entre un terminal informatique distant et un boîtier, dans des modes de réalisation de la présente invention,
- la figure 11 représente, sous forme d'un logigramme, des étapes mises en oeuvre pour l'inscription d'un interlocuteur, ou contact, d'un utilisateur de boîtier,
- la figure 12 représente, sous forme d'un logigramme, des étapes mises en oeuvre pour la transmission d'un média à un utilisateur de boîtier,
- la figure 13 représente, sous forme d'un logigramme, des étapes mises en oeuvre pour forcer la prise de ligne par un boîtier,
- la figure 14 représente, schématiquement, des interfaces utilisateurs pour smartphone (ou téléphone intelligent à affichage d'images), pour qu'un utilisateur appelé fournisse un média représentant un caractère physique le représentant, non déformé,
- la figure 15 représente, schématiquement, des interfaces utilisateurs pour ordinateur, box ou borne, pour qu'un utilisateur appelé fournisse un média représentant un caractère physique le représentant, non déformé,
- la figure 16 représente, schématiquement, des interfaces pour téléphone ou smartphone pour qu'un utilisateur configure un service pour la mise en oeuvre de la présente invention,
- la figure 17 représente, schématiquement, des interfaces pour qu'un utilisateur appelant reconnaisse visuellement un utilisateur appelé,
- la figure 18 représente, schématiquement, des interfaces lorsqu'un utilisateur appelant ne reconnaît pas visuellement un utilisateur appelé,
- la figure 19 représente, schématiquement, des interfaces pour qu'un utilisateur appelant reconnaisse auditivement un utilisateur appelé,
- les figures 20 et 21 illustrent, sous forme d'un logigramme, des étapes mises en oeuvre dans un mode de réalisation particulier du procédé objet de la présente invention.

Les termes « appelant » et « appelé » sont utilisés pour toutes formes de mise en relation et pour tout type de communication, téléphone, sms, courriel, visiophonie etc.

Nous appelons « biométrie de l'appelé » tout caractère physique, notamment voix ou visage, permettant d'attester de la reconnaissance physique de l'appelé par l'appelant.

Dans la description, deux caractères physiques sont mis en oeuvre, à titre d'exemples :
- la reconnaissance d'une photo de l'appelé ou
- la reconnaissance de la voix de l'appelé.

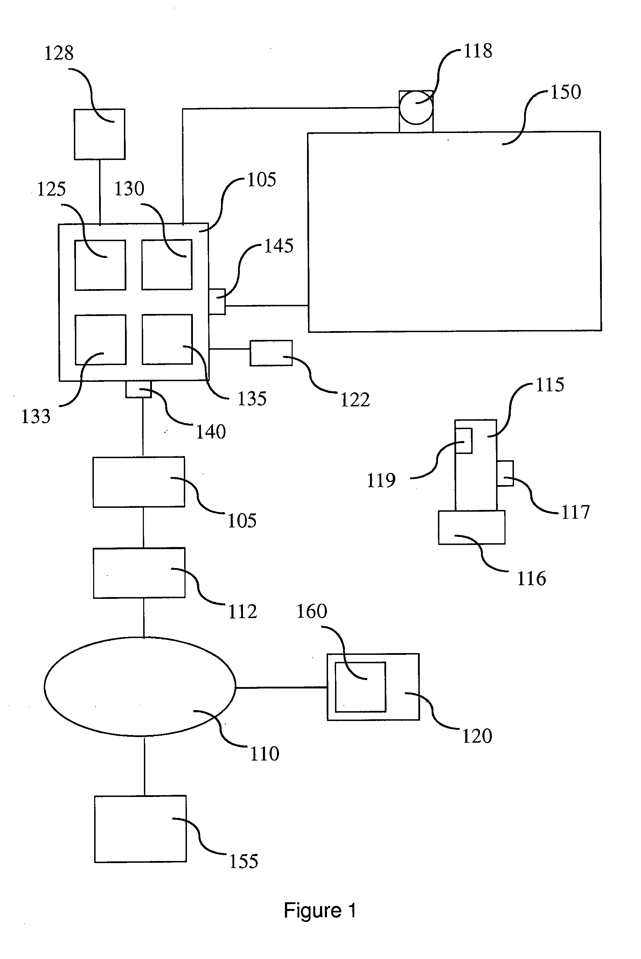

La figure 1 illustre, de façon schématique, une mise en oeuvre de la présente invention, comprenant, tout d'abord, un boîtier 105 reliés à un réseau informatique 110, par exemple le réseau Internet, par l'intermédiaire d'un modem (généralement appelé « box ») 112. Chaque boîtier possède une adresse sur le réseau 110, par exemple une adresse IP (acronyme de « Internet Protocol » ou protocole internet) dynamique et unique. Chaque boîtier est associé à au moins une télécommande 115 permettant de contrôler ce boîtier à courte distance (typiquement à quelques mètres de distance), préférentiellement par le biais d'une communication radiofréquence.

Un ensemble de serveurs, appelés conjointement « serveur central » 120 est également relié au réseau 110. Le serveur central 120 est utilisé par différents boîtiers 105 et par des terminaux informatiques distants 155 qui communiquent épisodiquement avec l'un ou l'autre de ces boîtier 105.

Chaque boîtier 105 comporte les moyens nécessaires à son fonctionnement, notamment une unité d'alimentation électrique 125, une unité de traitement de données autonome 130, une unité de stockage de données non volatile 135, par exemple un disque dur ou des composants de mémoire flash, un connecteur 140 reliant le boîtier 105 au modem 112, un connecteur 145 reliant le boîtier 105 à un téléviseur 150 et un haut-parleur 133. Chaque boîtier est également associé à au moins une caméra numérique 118, à un microphone d'ambiance 122 et, éventuellement, à des capteurs 128, notamment dans le cas d'extension de ses applications à la télémédecine et/ou à la télésurveillance.

Préférentiellement, le boîtier 105 est constitué des principaux composants et circuits d'un ordinateur dont la télécommande 115 est, en fait, un clavier sans fil et dont le téléviseur 150 tient le rôle d'écran. Dans la suite de la description, ce clavier sans fil est appelé « télécommande » du fait de son ergonomie adaptée à la tenue dans une main pour appuyer sur quelques touches. En d'autres termes, la télécommande 115 constitue un émulateur de clavier numérique, sans fil, qui envoie des codes, par exemple ASCII (American Standard Code for Information Interchange « Code américain normalisé pour l'échange d'information »). Grâce à cette caractéristique, aucun pilote (« driver ») n'est nécessaire pour que l'unité centrale du boîtier 105, qui est basé sur une architecture d'ordinateur à usage général, par exemple PC (acronyme de « personal computer » pour « ordinateur personnel ») traite les commandes transmises par la télécommande. L'ordinateur/boîtier 105 ne fait alors qu'écouter les codes transmis par son clavier/télécommande 115. Par exemple, un programme FlashPlayer (marque déposée) écoute les événements claviers.

Le boîtier 105 est un produit notamment destiné aux personnes âgées ou hospitalisées. Il s'agit d'un boitier relié à un téléviseur de son utilisateur, qui lui permet de communiquer avec son entourage par le biais de la caméra numérique 118 et d'au moins un microphone. Son utilisateur voit sur l'écran de son téléviseur 150 et discute en direct avec famille et amis, où qu'ils se trouvent dans le monde, sans limite de temps. Les personnes âgées bénéficient alors d'un lien social et affectif. Pour éliminer toute difficulté d'utilisation, toute commande passe par la télécommande 115 très simple, à grosses touches de couleur dont les couleurs correspondent à des zones et messages colorés affichés sur l'écran du téléviseur 150. L'utilisation de l'écran du téléviseur 150 comme interface favorise l'adoption de ce produit par les séniors pour qui la télévision fait déjà partie du cadre de vie, contrairement à un ordinateur à écran tactile par exemple.

D'autres fonctions, décrites plus loin, permettent la transmission de messages, de liens hypertextes et de médias (photos, audio ou audiovisuels) à l'utilisateur du boîtier 105 et de capter des événements ou états médicaux de cet utilisateur ou de sécurité du local où se trouve le boîtier 105.

Le boîtier 105 permet, dans différents modes de réalisation, l'utilisation d'un ou plusieurs des modules suivants :

### Module « Télémédecine » :

Les proches ou le personnel soignant peuvent accéder, en fonction de leur autorisation, à certaines informations sur l'état de santé de la personne âgée, et peuvent être alertés si le système décèle des anomalies. Les données physiques captées peuvent comporter : température, pouls, tension, position dans l'espace (=position allongée, assise, debout), hydratation, nourriture, conditions atmosphériques de l'environnement de l'utilisateur.

Le module télémédecine met en oeuvre des capteurs 128 dédiés pour acquérir des informations d'ordre médical concernant l'utilisateur. Il transmet les informations d'ordre médical au médecin, permettre à l'utilisateur de communiquer avec des personnels de santé, permettre au personnel de santé d'effectuer le paramétrage du module avec l'utilisateur (définition des mesures à effectuer, des informations à partager...), alerter les services de secours ou des proches en cas de mauvais état de santé de l'utilisateur. Parmi les capteurs spécifiques au module télémédecine, on peut citer un tensiomètre Bluetooth (marque déposée), une balance Bluetooth, un capteur d'oxymétrie sans fil, un glucomètre sans fil, une ceinture médicale multifonction. Les données relevées peuvent comporter le rythme cardiaque, le rythme respiratoire, l'amplitude de la respiration, la température de la peau, la position du corps de l'utilisateur (debout, face contre terre, sur le dos, sur le coté, tête en bas, ...), l'activité (inactif, légère activité, activité intensive) et la détection des chocs.

### Module « Géo localisation » :

Les proches ou le personnel soignant sont alertés lorsque la personne âgée sort d'un périmètre prédéfini ou présente un comportement anormal.

### Module « Domotique » :

Le système détecte les anomalies (fuite de gaz, détection de fuite, détecteur de température, compteur de consommation électrique, détection de fumée, ouverture de porte extérieure, détection de présence, déclenchement d'une sirène ...) dans l'environnement de l'utilisateur et l'alerte ainsi que des proches autorisés à accéder à ce type d'informations. Ce module permet aussi une gestion simplifiée de la maison (complètement ou partiellement automatisé).

Le module de domotique consiste en l'installation de capteurs de mesure 128 afin de surveiller l'état du domicile de l'utilisateur et, éventuellement, de motorisations afin d'automatiser celui-ci, simplifier la vie de l'utilisateur et permettre, si nécessaire, de le surveiller pour sa propre sécurité (pour personnes souffrant de déficiences mentales comme la maladie d'Alzheimer).

La mise en route des capteurs et actionneur peut se faire par branchement sur une prise de courant ou par insertion des piles pour les autres.

Le système d'alerte fonctionne en temps réel (SMS, MMS, E-mail, Appel Vocal, Fax)

### Module « prises de vues interactives » :

L'utilisateur filme / photographie à l'aide d'une caméra mobile son environnement et les médias en résultant sont rendus immédiatement disponibles à la consultation pour ses proches sur l'espace virtuel de cet utilisateur.

Le boitier 105 fournit un support matériel et commun aux modules (processeur, espace de stockage mémoire, connectiques...).

La télécommande 115, représentée en figure 1, insérée dans une embase 116 qui lui fournit éventuellement une alimentation électrique comporte notamment un contacteur 117 et un microphone 119. La télécommande 115 comporte seulement le microphone 119 mais pas de haut-parleur. La télécommande est alors adaptée à transmettre au boîtier 105 un signal représentatif du son capté par ce microphone 119. Préférentiellement, un traitement d'élimination d'échos (« echo cancellation ») est appliqué au signal capté. En effet, si l'interlocuteur distant utilise un microphone d'ambiance, un phénomène d'écho, désagréable, peut se produire car le microphone 119 de la télécommande 115 fonctionne aussi comme un microphone d'ambiance.

Le contacteur 117 positionné préférentiellement au dos de la télécommande 115 provoque la mise en fonctionnement du microphone 119 lorsqu'un appui a lieu sur ce contacteur 117. Dans des modes de réalisation, le contacteur 117 provoque alors aussi l'arrêt du fonctionnement du microphone d'ambiance 122.

Ainsi, dès que l'utilisateur pose la télécommande 115 sur une surface plane ou appuie sur ce contacteur 117 en tenant la télécommande, le son est capté plus près de lui que s'il était capté par le microphone d'ambiance 122.

Préférentiellement, le signal sonore en provenance de l'interlocuteur distant est émis sur un haut-parleur 133 indépendant de celui du téléviseur afin de permettre à l'utilisateur du boîtier 105 d'entendre le son du programme de télévision qu'il suit même lorsqu'il y a un appel entrant sur le boîtier 105.

Ainsi, dans des modes de réalisation, la présente invention met en oeuvre un dispositif de communication à distance qui comporte :
- au moins un boîtier fixe comportant au moins un haut-parleur et
- un moyen de commande à distance du fonctionnement d'au moins un dit haut-parleur, ledit moyen de commande à distance comportant un microphone seul et un moyen de transmission à au moins un dit boîtier d'un signal représentatif du signal émis par ledit microphone.

L'utilisateur n'est alors pas incité à porter à proximité de son oreille le moyen de commande à distance mais, au contraire, de le tenir dans sa mains appuyée sur un support ou de le poser sur un tel support. Le microphone est ainsi à proximité de l'utilisateur et ne nécessite pas d'élever la voix. De plus, l'utilisateur évite de fatiguer son bras ou de devoir porter un casque audio.

On note que le haut-parleur mis en oeuvre dans ces modes de réalisation peut être celui du boîtier 105 ou celui du téléviseur 150, commandé par le boîtier 105.

Le contacteur 117 permet d'utilisateur la télécommande 115 en « main libre » en déclenchant le fonctionnement du microphone 119 et la suppression d'écho dans le signal fourni par ce microphone 119. Il est ainsi préférentiellement positionné au dos de la télécommande 115.

Dans des modes de réalisation, on ajoute au boîtier 105, un moyen d'appel de tous les contacts de l'utilisateur lors de la sélection, sur la télécommande et/ou sur le boîtier 105, d'un bouton d'alerte (non représenté).

Dans des modes de réalisation, on ajoute au boîtier 105, un moyen de détection de chute de l'utilisateur, une détection commandant l'appel des tous les contacts. La détection de chute peut, par exemple, utiliser une reconnaissance de voix ou de sons, un accéléromètre intégré à la télécommande, un boîtier porté par l'utilisateur ou un traitement des images captées par la caméra 118 associée au boîtier 105.

L'utilisateur commande le boîtier 105 avec la télécommande 115. Pour passer de son programme télé à l'affichage du signal émis par le boîtier 105, ou inversement, il doit appuyer sur le bouton AV (« Audio/vidéo » ou « auxiliaire ») de la télécommande de la télévision.

Le boîtier 105 devant se connecter aux différents serveurs du serveur central 120 l'ensemble des connexions et flux sont sécurisés. A cet effet, on met en oeuvre, par exemple :
- la couche « SSL » (Transport Layer Security (TLS), anciennement nommé Secure Sockets Layer (SSL), est un protocole de sécurisation des échanges sur Internet) et
- un couple de clés public/privé pour l'authentification des machines entre elles.

Le démarrage du boîtier 105 est automatique et lance (ou « logue ») l'utilisateur Linux automatiquement. Le boîtier 105 reste allumé en permanence.

Lorsque le boîtier 105 se connecte au serveur 120, il se comporte comme un client léger. Via un DHCP (acronyme de « Dynamic Host Configuration Protocol », un terme anglais désignant un protocole réseau dont le rôle est d'assurer la configuration automatique des paramètres IP d'une station, notamment en lui assignant automatiquement une adresse IP et un masque de sous-réseau. DHCP peut aussi configurer l'adresse de la passerelle par défaut, des serveurs de noms DNS), le boîtier se voit attribuer une adresse.

Au moment de l'installation, on configure le navigateur sur Internet (Firefox, Internet Explorer..., marques déposées) en spécifiant la page de démarrage (soit l'adresse électronique ou « URL » du serveur vidéo du serveur central 120) et on importe un certificat.

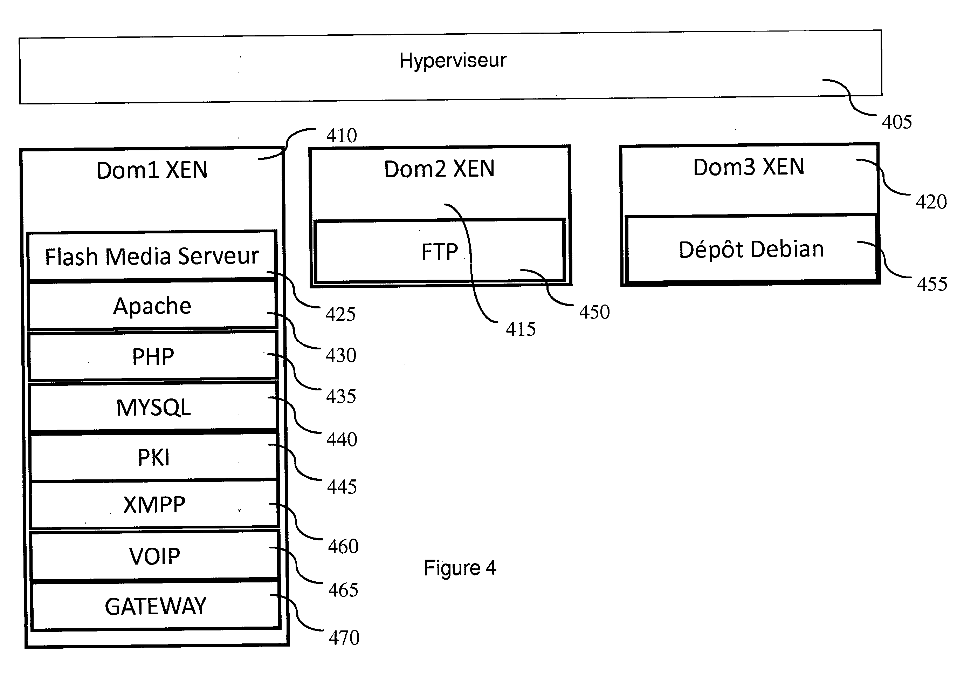

Bien que terme de « serveur central » 120 puisse désigner, physiquement, un seul serveur, préférentiellement, le serveur central 120 est constitué d'une pluralité de serveurs adaptés à communiquer entre eux, comportant, comme illustré en figure 4 :
- un hyperviseur 405,
- un serveur 425 de streaming qui permet, entre autres, de streamer les flux vidéo afin de les rendre disponibles pour les différents clients (par exemple le serveur libre et gratuit Red5 ou un serveur Flash media serveur), Ce serveur gère :
   - les clients connectés,
   - les interactions entre les clients,
   - la gestion des flux (temps réel ou enregistrés) et
   - l'exécution de script de mise à jour sur les boîtiers,
- Le serveur 425 P2P (« peer-to-peer » ou pair-à-pair) qui permet, egalement, d'établir des flux UDP entre clients afin de rendre accessible simplement les flux du serveur de streaming,
- un serveur web 430 (par exemple de type Apache) qui permet, entre autres, l'accessibilité des informations via un site web publié,
- un serveur de sécurité 430 qui permet, entre autres, la sécurisation des transmissions sur le réseau par cryptage des données,
- un serveur de base de données 440 qui permet, entre autres, la gestion des bases de données de l'ensemble des systèmes,
- un serveur 445 de gestion d'autorité de certification qui permet, entre autres, la création et la délivrance, pour chaque boîtier, d'un certificat unique et intégré automatiquement à celui-ci,
- un serveur FTP 450 (acronyme de « File Transfer Protocol », un protocole de communication destiné à l'échange informatique de fichiers sur un réseau TCP/IP. Il permet, depuis un ordinateur, de copier des fichiers vers un autre ordinateur du réseau, d'alimenter un site web, ou encore de supprimer ou de modifier des fichiers sur cet ordinateur),
- un serveur de dépôt Debian 455 (Debian est un système d'exploitation basé exclusivement sur des logiciels libres qui permet un mode d'unification de nombreux éléments pouvant être développés indépendamment les uns des autres, pour plusieurs architectures matérielles et relativement à plusieurs noyaux logiciels. Ces paquets sont associés sous forme de « paquets » modulables en fonction des choix et des besoins),
- un serveur 460 XMPP (par exemple un serveur de type OpenFire) qui permet, entre autres, l'échange de fichier, le jeu en ligne et la notification en temps réels,
- un serveur 465 de VOIP (« Voice on IP » ou voix sur Internet), par exemple le serveur libre et gratuit Asterisk, qui permet, entre autres, d'interfacer le réseau téléphonique au réseau du serveur web central et/ou
- un serveur 470 de gateway qui permet, entre autres, d'effectuer un lien vers une plateforme de gestion tierce, par exemple de télémédecine et/ou de télésurveillance.

Comme illustré en figure 4, ces serveurs virtuels dont le fonctionnement est supervisé par l'hyperviseur 405 peuvent être assemblés en trois serveurs 410, 415 et 420.

Le serveur 120 d'administration de l'ensemble des boîtiers 105 permet, entre autres, d'effectuer les tâches suivantes :
- mise à jour des boîtiers 105,
- vérification de la disponibilité des boîtiers 105,
- centralisation des logs (rapports) et
- prise de main à distance des boîtiers 105.

Ainsi, le serveur 120 utilise préférentiellement un protocole de communication sécurisé, par exemple HTTPS (acronyme de « HyperText Transfer Protocol Secure » ou protocole sécurisé de transfert hypertexte). La connexion entre un boîtier 105 et un ordinateur 155 est sécurisée grâce, par exemple, à un serveur OpenSSL (marque déposée) que comprend le serveur 120. A cette fin, chaque boîtier 105 est préalablement configuré, c'est-à-dire qu'un identifiant unique et un mot de passe sont associés à chacun des ordinateurs 155 autorisés à communiquer avec chaque boîtier 105. Ces informations sont stockées dans une base de données 160, par exemple mettant en oeuvre MySQL (marque déposée) intégré au serveur 120. L'inscription de l'identification des différents ordinateurs est réalisée par l'intermédiaire d'une interface de gestion réseau accessible et configurable à distance par l'intermédiaire d'un ordinateur relié au réseau 110. L'accès à cette interface réseau est protégée par l'identifiant propre au boîtier 105 et par le mot de passe qui lui est associé.

Préférentiellement, le serveur central 120 intègre le SIP (« Session Initiation Protocol », un protocole multimédia permettant, par exemple, la voix sur réseau IP).

L'interface en flash est stockée sur le serveur central 120. Cependant, lors de la configuration du boîtier 105, la communication à distance n'est généralement pas fonctionnelle. Pour remédier à ce problème, on installe et on configure un serveur (non représenté) de la toile (« web ») en localhost (hôte local) sur le boîtier 105. Il a pour objet de permettre la configuration du boîtier 105.

Toute la configuration du boîtier 105, ainsi que sa mémorisation, est centralisée sur le serveur central 120 d'une part et serveur local d'autre part. La configuration et le site local sont conservés en mémoire flash dans le boîtier 105 ainsi que les commandes permettant la communication avec le serveur central 120.

La personnalisation est effectuée et conservée à distance du boîtier 105, ce qui permet une restauration et une mise à jour plus aisée.

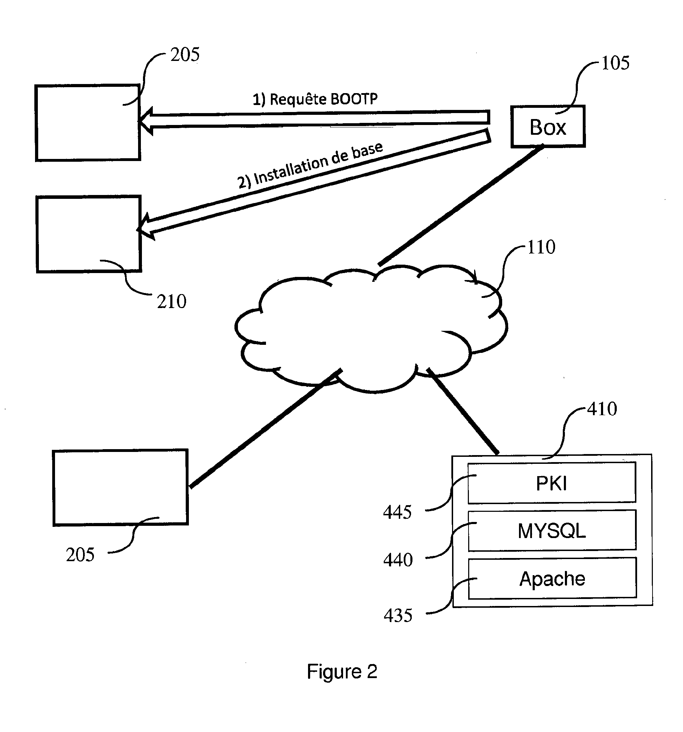

Comme illustré en figure 2, pour installer le boîtier 105, on le branche au serveur d'installation local 205, on accède au BIOS (« Basic Input Output System » pour système d'entrée-sortie basique) du boîtier 105, pour permettre un Boot LAN, c'est-à-dire de réseau (voir Bootp en figure 2).

Pour générer une clé unique pour chaque boîtier 105, lors de l'installation du boîtier, on utilise l'adresse MAC du boitier 105 pour obtenir un certificat PKI (acronyme de « Public Key Infrastructure » pour infrastructure de clé publique) du serveur PKI 445.

Ce certificat, généré et installé par le boîtier 105 est intégré au navigateur du boîtier.

On utilise ensuite ce certificat pour réaliser une authentification passive, lors de chaque connexion entre le boîtier et le serveur. Puis, le boîtier met en place un tunnel chiffré et c'est le serveur qui prend la main. Toutes les communications sont ensuite chiffrées, par exemple en utilisant le protocole https (acronyme de « secure hypertext transfer protocol » pour protocole sécurisé de transfert hypertexte). On permet ainsi une prise de main sans routage de port, ni ouverture de port, ni paramétrage de serveurs répliqués. De plus, on peut ainsi aisément changer le boîtier 105 d'un utilisateur.

Ensuite, vient la partie upgrade avec l'installation d'un « paquet », qui permet de modifier la distribution classique et de la remanier via le serveur de mise à jour.

Cette partie comprend l'intégration des systèmes de sécurité et d'authentification tels que :
- une routine d'import automatisé d'un certificat de sécurité niveau utilisateur avec passphrase dans un navigateur (clé d'obtention = mac adresse de la VNDBoxTV).
- échange des clés RSA pour liaison entre le serveur de mise à jour et serveur SSH

Ensuite la phase d'autologin se fait sans invite.

Les mises à jour de la VNDBoxTV sont automatisées. A chaque démarrage, une comparaison (via la pile flash, php, mysql) de la version installée est faite par rapport a la version actuelle conservée par le serveur de mise à jour. Si elles diffèrent, la mise a jour est lancé.

Chaque système se met a jour de façons indépendante, mais il y a la possibilité de lancé une mise a jour global sur un certains nombres de boîtiers.

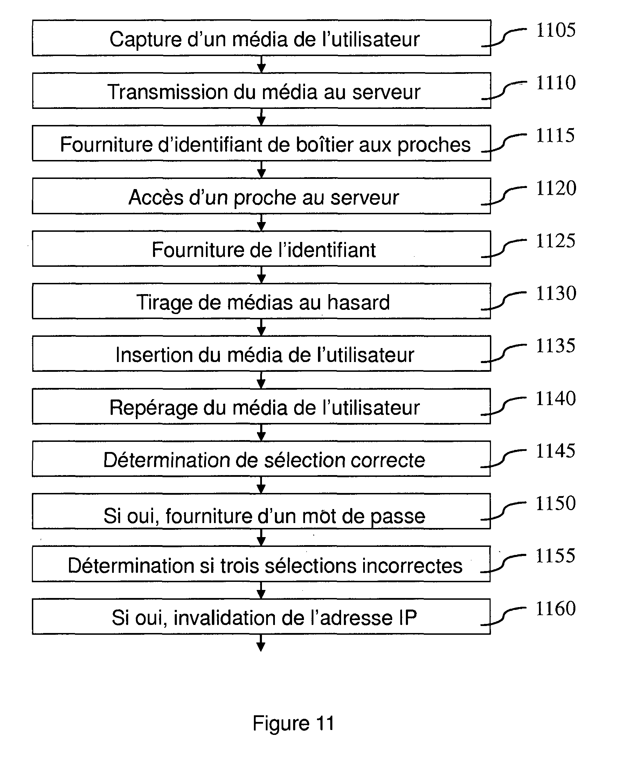

Pour que la communication avec des interlocuteurs puisse être mise en place, préférentiellement, on impose à l'utilisateur du boîtier de prendre une photo de lui ou de son environnement, ou d'enregistrer sa voix, ou de se filmer (étape 1105 en figure 11). D'une manière générale, on constitue ainsi un média audiovisuel représentatif de l'utilisateur, pour qu'il puisse être appelé. Ce média est transmis au serveur central 120 au cours d'une étape 1110.

On note que l'utilisateur peut changer ce média à tout moment.

Pour qu'un proche puisse s'identifier auprès du serveur central 120 et communiquer avec l'utilisateur du boîtier 105, cet utilisateur fournit à ce proche l'adresse internet d'un site hébergé par le serveur central 120 et un numéro (identifiant unique) inscrit sur le boîtier 105, au cours d'une étape 1115.

Lorsque ce proche (aussi appelé « contact » dans la suite de la description) veut pouvoir communiquer avec l'utilisateur, il accède, avec un terminal informatique 155, typiquement un ordinateur, au site hébergé par le serveur du réseau informatique à longue distance (étape 1120). Il fournit alors un identifiant de l'utilisateur du boîtier 105 ou du boîtier 105 (étape 1125).

Puis, le serveur présente, au cours d'une étape 1135, à ce proche une page dans laquelle se trouve une photographie de l'utilisateur du boîtier 105 et de nombreuses autres photographies tirées au hasard (étape 1130) dans une base de données de photographies comportant éventuellement des photographies d'autres utilisateurs. Cette page demande, dans un message textuel, au contact de cliquer sur la photographie de l'utilisateur du boîtier 105.

Pour s'authentifier, le contact doit alors cliquer sur la photographie de l'utilisateur du boîtier 105, au cours d'une étape 1140. Si la sélection correspond à la photographie fournie par l'utilisateur, ce qui est déterminé au cours d'une étape 1145, le contact obtient un mot de passe (« password »), par exemple transmis par courrier électronique ou minimessage, au cours d'une étape 1150. Eventuellement, le contact obtient aussi, au cours de cette étape 1150, un identifiant (« login ») si celui-ci n'est pas un identifiant qu'il connaît déjà, par exemple son adresse de courrier électronique (email). Si la sélection est négative, on redemande au contact de cliquer sur la photo de l'utilisateur, en retournant à l'étape 1135. Si trois fois de suite la sélection n'est pas correcte, ce qui est déterminé au cours d'une étape 1155, l'adresse sur le réseau de l'ordinateur 155 est invalidée et mémorisée comme telle dans une base de données d'adresses invalides conservée par le serveur, au cours d'une étape 1160.

D'une manière générale, notamment pour le cas où ce n'est pas une photographie qui est prise par l'utilisateur du boîtier 105, pour authentifier l'appelant, celui-ci identifie l'appelé et sélectionne un média audiovisuel représentatif de l'appelé parmi une pluralité de médias. Les autres médias présentés sont pris au hasard dans une base de données de médias. Le serveur central 120 valide l'identifiant de l'appelant, comme autorisé à passer des appels auprès de l'utilisateur du boîtier 105 uniquement si le média sélectionné par l'appelant correspond à l'appelé. Ainsi, seule une personne connaissant l'appelé, sa photographie ou sa voix, peut l'identifier et ainsi s'authentifier comme appelant légitime.

Grâce à la mise en oeuvre de cette procédure d'authentification, on évite à l'utilisateur de recevoir des « spams » (communications non sollicitées reçues de la part de tiers). Le déblocage de l'adresse invalidée peut être effectué après une durée prédéterminée ou par le gestionnaire du site hébergé par le serveur.

Dans des variantes, l'authentification par vérification de la reconnaissance, par l'appelant, d'un média représentatif de l'appelé est effectuée à chaque appel passé par l'appelant.

On note que cet aspect de la présente invention n'est pas limité à l'utilisation d'un boîtier de communication particulier mais s'étend, au contraire, à tout système de communication, notamment en téléphonie fixe ou mobile et pour la transmission de courriers électroniques ou de minimessages.

On va maintenant décrire différentes fonctions du boîtier 105

En ce qui concerne la prise de main, la présente invention met préférentiellement en oeuvre un système de contrôle à distance des boîtiers sans routage de port.

On note que, dans des variantes, seul le flux vidéo est transporté selon un protocole pair-à-pair (« peer-to-peer » ou « P2P ») mais le reste des communications passent par le serveur (et est potentiellement mémorisé), ce qui permet un gain sur la latence.

La fonction la plus simple est la réception d'un appel passé par un proche. Initialement, le boîtier 105 est en mode de veille. Lorsqu'un ordinateur 155 tente de se connecter au boîtier 105 par l'intermédiaire du serveur 120, un script PHP vérifie par interrogation de la base de données 160, que cet ordinateur 155 a préalablement été enregistré dans cette base de données 160 et que l'identifiant et le mot de passe envoyés par celui-ci sont ceux associés au boîtier 105.

Deux cas de figures se présentent :
- l'ordinateur 155 appelant n'est pas reconnu, soit parce qu'il n'est pas inscrit dans la base de données 160, soit parce que l'identifiant et/ou le mot de passe saisi(s) par l'utilisateur de l'ordinateur 155 sur le serveur 120 sont erronés ; Dans ce cas, la procédure de connexion entre l'ordinateur 155 et le boîtier 105 s'arrête et il n'y a donc pas de communication possible entre l'ordinateur 155 et le boîtier 105 ;
- l'ordinateur 155 est reconnu ; Dans ce cas, le boîtier 105 indique à son utilisateur, de manière visuelle, par affichage, et/ou sonore, par émission d'un signal sonore par le haut-parleur 133, qu'un appel entrant est en attente.

Si le téléviseur 150 n'est pas allumé, il doit l'être et la source auxiliaire doit être sélectionnée. Puis, la télécommande 115 permet d'accepter ou de refuser l'appel. Deux options sont ainsi possibles :
- soit l'utilisateur du boîtier 105 rejette l'appel, au moyen d'une télécommande associé au boîtier 105, auquel cas la connexion entre l'ordinateur 155 et le boîtier 105 est arrêtée ;
- soit l'utilisateur du boîtier 105 accepte l'appel, auquel cas la diffusion de la vidéo émise par une webcam reliée à l'ordinateur et le son émis par un microphone relié à ce même ordinateur est activée, c'est-à-dire que les images reçues par le boîtier 105 s'affichent sur le téléviseur auquel est relié le boîtier 105 et le son est émis sur le haut-parleur intégré dans le boîtier 105.

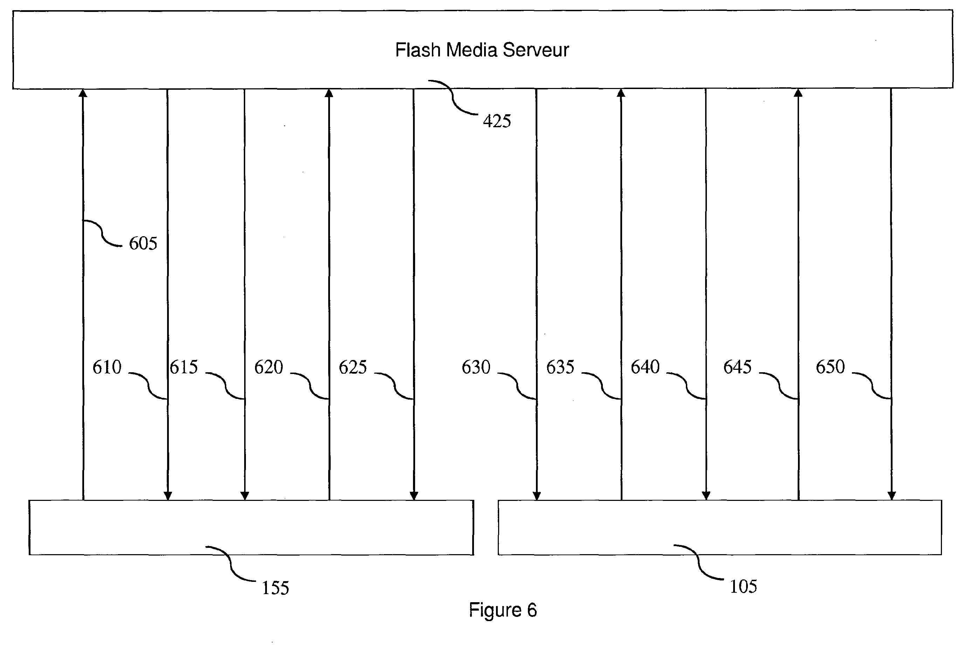

Les figures 5 et 6 illustrent ces étapes.

Le boîtier 105 transmet une clé aux serveurs 430, 435 et 440, dans l'échange de messages 505. Il reçoit, dans un échange de messages 510, un identifiant unique pour la connexion au serveur FMS 425. Un échange de messages 515 lui permet de se connecter au serveur FMS 425, qui vérifie l'identifiant unique du boîtier 105, à cet effet.

Un échange de messages 520 permet de mesurer la bande passante disponible, le débit de données vidéo possible et la qualité vidéo qui y correspond, côté boîtier 105.

Du côté de l'ordinateur 155, un échange de messages 525 permet la connexion de l'ordinateur 155 aux serveurs 430, 435 et 440. Un échange de messages 530 permet la récupération, par l'ordinateur 155, d'un identifiant unique pour la connexion au serveur FMS 425. Un échange de messages 535 permet à l'ordinateur 155 de se connecter au serveur FMS 425, qui vérifie l'identifiant unique de l'ordinateur 155, à cet effet.

Un échange de messages 540 permet de mesurer la bande passante disponible, le débit de données vidéo possible et la qualité vidéo qui y correspond, côté ordinateur 155.

Une fois les connexions au serveur FMS 425 effectuées par le boîtier 105 et l'ordinateur 155, comme illustré en figure 6, l'ordinateur 155 effectue un appel en fournissant l'identifiant du boîtier 105, au cours d'un échange de messages 605. Il reçoit une réponse du serveur FMS 425, au cours d'un échange de messages 610 et des informations de connexion, au cours d'un échange de messages 615. L'ordinateur 155 effectue alors l'émission de signaux vidéo, au cours d'échanges de messages 620 et la réception de signaux vidéo, au cours d'échanges de messages 625.

En parallèle, le serveur FMS 425 envoie une invite d'appel au boîtier 105, au cours d'un échange de messages 630. Il reçoit une réponse au cours d'un échange de messages 635. Il fournit au boîtier 105 des informations de connexion, au cours d'un échange de messages 640. Le boîtier 105 effectue alors l'émission de signaux vidéo, au cours d'échanges de messages 645 et la réception de signaux vidéo, au cours d'échanges de messages 650.

Ainsi, au cours de l'étape de communication, si la caméra reliée au boîtier 105 et le microphone intégré à ce boîtier 105 sont activés, il y a également transmission réciproque de vidéo et de son vers l'ordinateur 155 avec lequel le boîtier 105 communique.

Si l'un quelconque des utilisateurs du boîtier 105 ou de l'ordinateur décide de terminer la connexion, respectivement au moyen de la télécommande associé au boîtier 105 ou si l'utilisateur de l'ordinateur 155 se déconnecte du serveur Web et la communication est simultanément arrêtée.

Pendant la communication, l'écran du téléviseur 150 affiche simultanément l'image de l'interlocuteur et l'image de l'utilisateur.

Pour contacter lui-même des proches, l'utilisateur doit appuyer sur une touche de la télécommande et choisir, parmi les contacts autorisés par le serveur central 120, celui qu'il veut joindre.

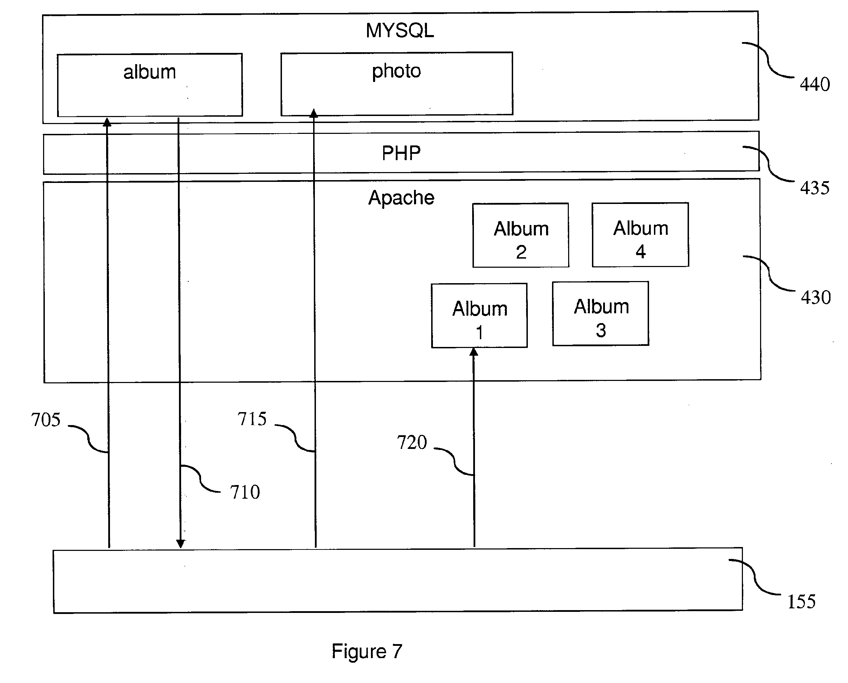

L'interlocuteur distant peut transmettre des photos à l'utilisateur du boîtier 105. La figure 7 illustre l'envoi de photos par l'ordinateur 155, en vue d'un tel partage avec l'utilisateur du boîtier 105.

Au cours d'un échange de messages 705 avec le serveur 440, par l'intermédiaire des serveurs 430 et 435, l'ordinateur 155 transmet un identifiant d'un album (répertoire de fichiers de photos) choisi par son utilisateur. Au cours d'un échange de messages 710, l'ordinateur 155 récupère le contenu du dossier choisi. Après avoir édité ce dossier, au cours d'un échange de messages 715, l'ordinateur 155 effectue l'enregistrement du dossier dans la base de données du serveur 440. Au cours d'un échange de messages 720, l'ordinateur 155 effectue le téléchargement (« upload ») des fichiers de photos dans les albums conservés par le serveur 430.

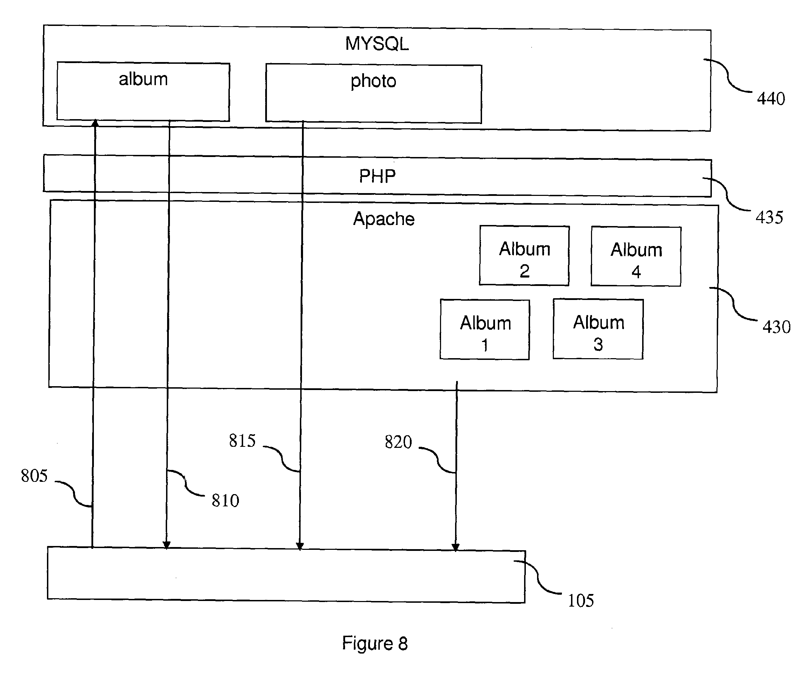

La figure 8 illustre la réception de photos par le boîtier 105. Au cours d'un échange de messages 805 avec le serveur 440, par l'intermédiaire des serveurs 430 et 435, le boîtier 105 transmet un identifiant d'un album (répertoire de fichiers de photos) choisi par son utilisateur. Au cours d'un échange de messages 810, le boîtier 105 récupère la description de l'album du dossier choisi. Au cours d'un échange de messages 815, le boîtier 105 effectue la réception de l'enregistrement en base de données depuis le serveur 440. Au cours d'un échange de messages 820, le boîtier 105 effectue le téléchargement (« download ») des photos des albums conservés par le serveur 430.

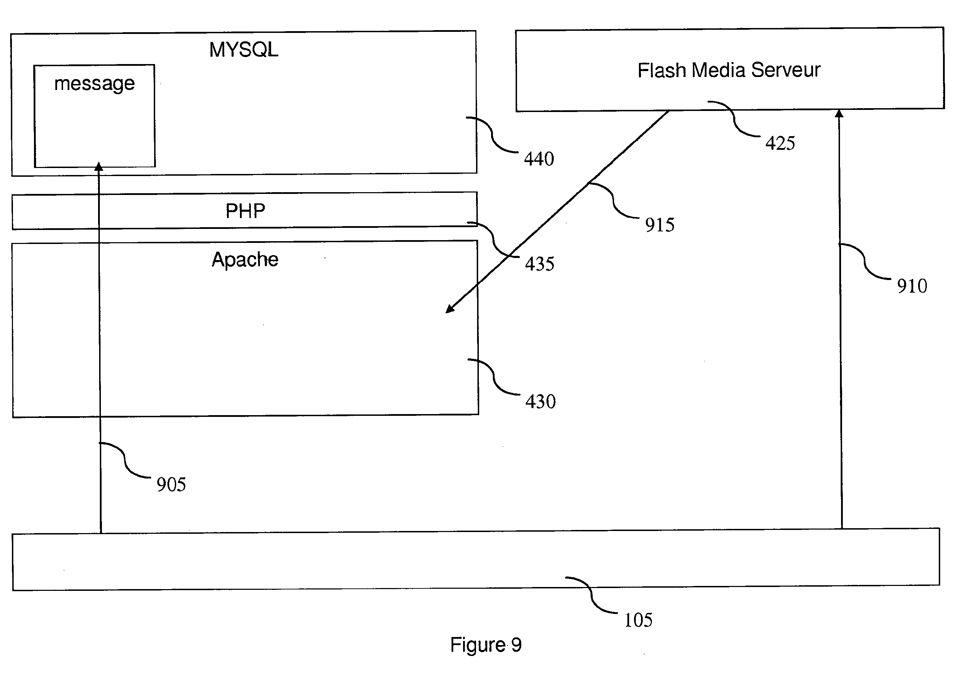

L'appelant, c'est-à-dire ici l'interlocuteur distant ou l'utilisateur du boîtier 105 peut laisser un message vidéo à l'appelé, en l'enregistrant. La figure 9 illustre des étapes d'envoi d'un tel message.

Au cours d'un échange de messages 905, l'ordinateur 155 se connecte au serveur 440, par l'intermédiaire des serveurs 430 et 435. Au cours d'un échange de messages 910, l'ordinateur 155 transmet le fichier du message au serveur 425. Au cours d'un échange de messages 915, le serveur 425 effectue l'enregistrement du fichier du message dans le serveur 430.

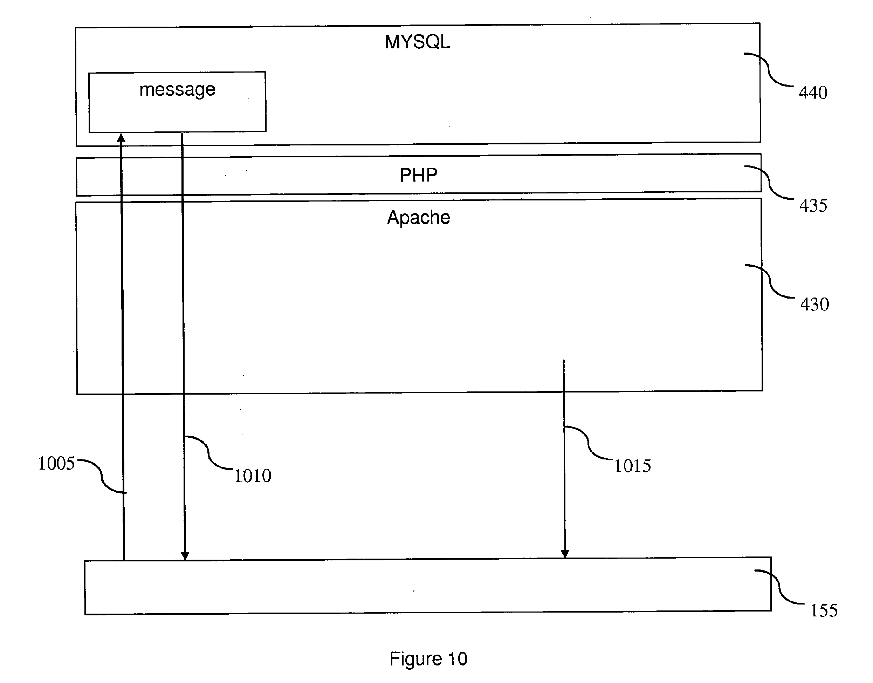

La figure 10 illustre des étapes de réception d'un message, par le boîtier 105. Au cours d'un échange de messages 1005, le boîtier 105 envoie au serveur 440, par l'intermédiaire des serveurs 430 et 435, un choix de message. Au cours d'un échange de messages 1010, le boîtier 105 récupère une adresse électronique URL du message. Au cours d'un échange de messages 1015, le boîtier 105 effectue la lecture en temps réel (« streaming ») du message vidéo.

Lorsqu'un message est envoyé à l'utilisateur du boîtier 105, un écran particulier apparaît sur le téléviseur, accompagné d'un « bip » sonore émis par le haut-parleur 133.

Pour prendre connaissance du message, l'utilisateur appui sur une touche de la télécommande associée, par sa couleur, à un message « Démarrer la lecture » affiché sur l'écran du téléviseur 150.

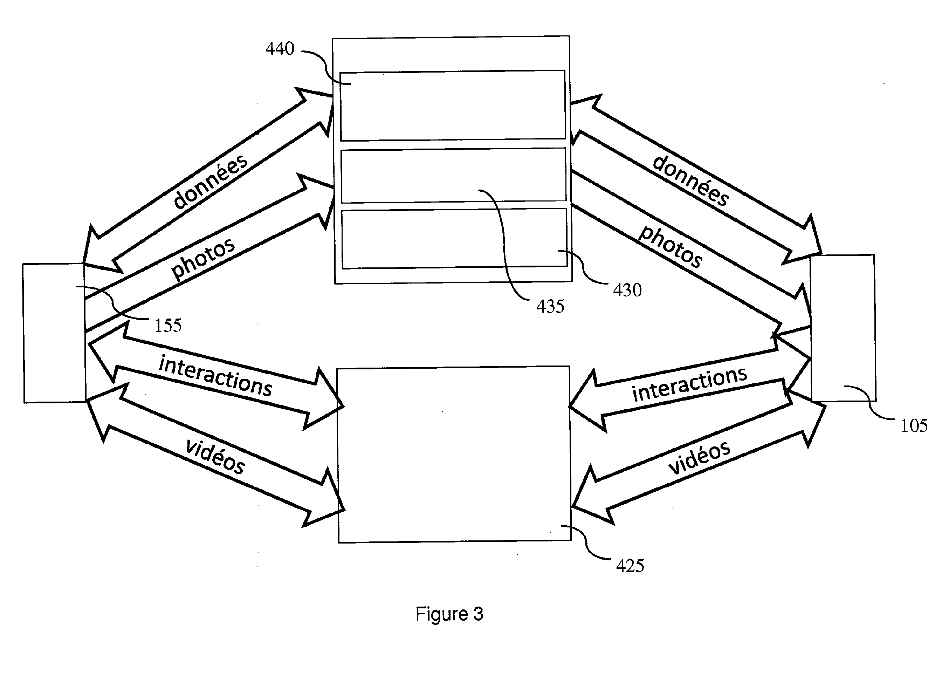

Comme illustré en figure 3, les données et les photos transitent par les serveurs 430, 435 et 440 alors que les interactions tel que état des utilisateurs, actions entre utilisateur, appel, message, photos et les flux vidéos transitent par le serveur 425.

En ce qui concerne le problème de la latence, lorsque l'on envoie trop de données, la transmission des données prend du retard : donc si la charge vidéo est trop importante, on prend du retard même sur l'audio. Préférentiellement, on mesure en permanence la latence et on règle les paramètres de la vidéo en fonction de la latence. Préférentiellement, on mesure la bande passante au niveau du boîtier 105 et on en déduit les réglages vidéo avant de commencer la communication, comme illustré en figure 5.

L'utilisateur de l'ordinateur 155 peut aussi partager des photos avec l'utilisateur du boîtier 105. Après sélection de cette fonction par cet utilisateur, les photos envoyées à partir de l'ordinateur 155 s'affichent sur le téléviseur relié au boîtier 105. De même, des messages textes peuvent être transmis au boîtier 105 pour affichage sur l'écran du téléviseur associé.

Pour communiquer des photographies, le contact dispose d'un espace mémoire dans le serveur, où il peut organiser en « albums » (répertoires), avec préférentiellement, un nombre limité d'albums et de photographies par album afin de limiter la consommation de mémoire mais aussi de faciliter la recherche de photographies, par l'un ou l'autre des interlocuteurs et réduire les risques d'addiction au visionnage des photographies.

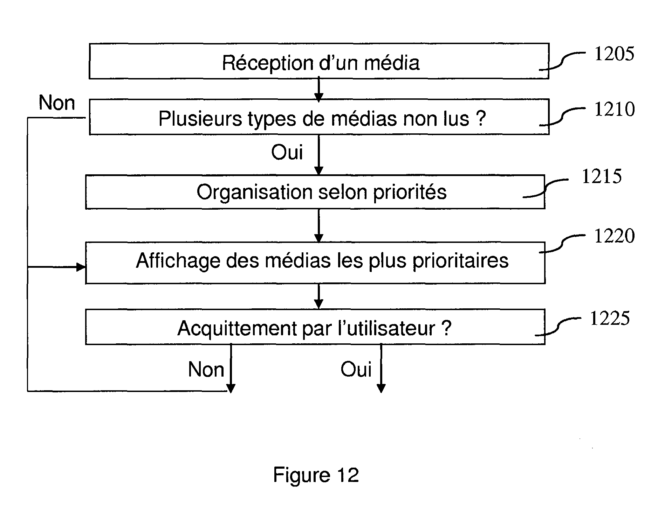

Ainsi, dans des modes de réalisation de la présente invention, on met en oeuvre un procédé de communication entre un système de communication émetteur (l'ordinateur 155) et un système de communication destinataire (le boîtier 105), qui comporte :
- une étape 1205 de réception d'un média (voir figure 12),
- une étape 1220 d'affichage d'une information représentative de ce média sur un écran associé au système de communication destinataire, ladite étape d'affichage ne s'achevant que sur commande de la part de l'utilisateur du système de communication destinataire, au cours d'une étape 1225.

Chaque envoi, message texte, photographie ou message vidéo et, éventuellement lien vers un site ou un média, est ainsi automatiquement signalé, ou affiché, sur le téléviseur de l'utilisateur du boîtier 105 jusqu'à acquittement par l'utilisateur du boîtier 105.

Ainsi, le destinataire, souvent dans l'attente de messages lorsqu'il s'agit d'un destinataire inoccupé, par exemple à la retraite, ne peut qu'être informé de l'arrivée d'un média qui lui est destiné.

Dans le cas d'une pluralité de types de messages, détectée au cours d'une étape 1210, on donne la priorité à l'affichage de messages vidéo sur l'affichage de médias texte puis sur l'affichage de médias photos, au cours d'une étape 1215.

Pour le plus haut niveau de priorité, on affiche, au cours de l'étape 1220, successivement des messages les identifiant sur l'écran du téléviseur 150.

Préférentiellement, l'utilisateur de l'ordinateur 155 peut insérer, dans les médias, notamment dans leur texte, des liens hypertexte. En sélectionnant l'un de ces liens, l'utilisateur du boîtier 105 accède au contenu associé.

Préférentiellement, l'utilisateur de l'ordinateur 155 peut insérer, dans les médias, notamment dans les médias comportant des images, que ce soit lors d'une communication en temps réel ou dans un message laissé dans la messagrie, la position du curseur de la souris (ou tout autre dispositif de pointage).

L'ordinateur 155, le serveur 120 ou le boîtier 105 sont adaptés à affecter cette position à celle d'un curseur de plus grande dimension, proportionnellement, dans l'image affichée sur l'écran du téléviseur 150 ou à une « loupe » provoquant un agrandissement d'une partie de l'image affichée. Le contact distant peut ainsi montré et commenter une partie de l'image.

Pour la réalisation de cette fonction de « loupe », du côté de l'ordinateur 155 ou du serveur 120, on détecte les coordonnées du média (par exemple deux coins opposés de l'image), on récupère les coordonnées du curseur de la souris, on détermine les facteurs d'homothétie représentant, dans un repère lié à l'image, la position de ce curseur. Ces coordonnées par rapport à l'image sont transmises au boîtier 105. De son côté, le boîtier 105 récupère ces coordonnées ainsi que celles de l'image et effectue une homothétie pour trouver le centre de la loupe. Un zoom est alors appliqué dans une zone prédéterminée entourant le centre de la loupe. Un zoom semblable est appliqué par l'ordinateur 150 sur l'image considérée.

Pour la transmission de lien, par exemple, on met en oeuvre l'API (Application Programming Interface ou interface de programmation d'application) fournie par le site youtube (marque déposée) à l'adresse suivante : http://code.google.com/intl/fr/apis/youtube /overview.html.

On télécharge (« upload ») alors un média sur le serveur 120 ou, préférentiellement, on y fournit un accès.

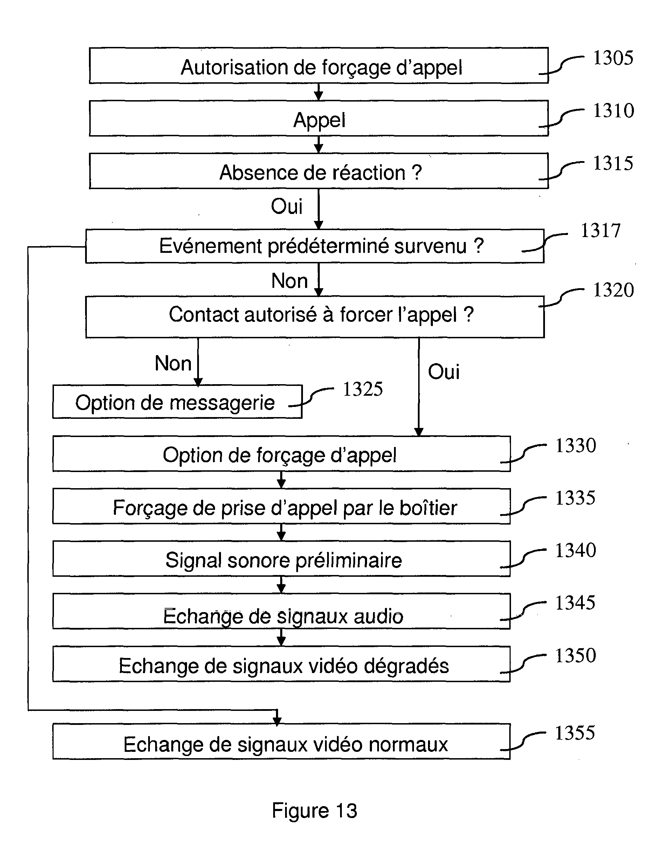

Dans des modes de réalisation illustrés en figure 13, on permet à au moins un contact de forcer la prise de ligne par le boîtier 105, pour visualiser le local et/ou l'utilisateur, dans un but de sécurité de l'utilisateur, au cas où il serait inconscient et des biens en cas d'absence.

A cet effet, l'utilisateur du boîtier 105 autorise au moins un contact à forcer la prise d'appel, au cours d'une étape 1305. Lorsqu'un contact effectue un appel vers le boîtier 105, étape 1310, on détermine si l'utilisateur du boîtier 105 n'accepte ni ne refuse l'appel pendant une durée prédéterminée au cours d'une étape 1315. Si c'est le cas, on détermine si le contact est autorisé à forcer l'appel, au cours d'une étape 1320. Si non, on ne propose au contact que l'option de laisser un message au cours d'une étape 1325, Si oui, on propose au contact de « forcer l'appel », ce qui correspond à un mode de prise d'appel automatique au cours d'une étape 1330. Le contact peut alors déclencher la prise d'appel par le boîtier, au cours d'une étape 1335.

Plus généralement, le procédé de communication instantanée entre une pluralité de systèmes de communication émetteurs (les ordinateurs 155) et le système de communication destinataire (le boîtier 105), comporte pour au moins un desdits dispositifs émetteurs (un ordinateur 155 disposant des droits à cet effet) :
- une étape 1310 d'appel du système destinataire par un système émetteur et
- en cas d'absence d'action sur le système destinataire par son utilisateur, une étape 1335 de déclenchement, par le système émetteur, de la prise de l'appel par le système destinataire.

Préférentiellement, ce procédé comporte, préliminairement, l'étape 1305 d'autorisation à forcer l'appel, donnée par l'utilisateur du boîtier 105. Dans ce cas, seuls les ordinateurs 155 disposant de ce droit se voient proposer l'option de forçage d'appel, les autres ne disposant que de l'option de laisser un message.

Préférentiellement, au cas où l'option de forçage d'appel est sélectionnée par le contact autorisé, on prévoit, successivement :
- une durée au cours de laquelle un signal sonore signale la prise d'appel, étape 1340,
- une durée au cours de laquelle seule les signaux audios sont échangés, étape 1345 puis
- une durée au cours de laquelle l'image captée par la caméra 118 est transmise, étape 1350.

Dans des modes de réalisation, cette image subit une dégradation afin de respecter la vie privée de l'utilisateur du boîtier 105 (image rendue floue, pixéllisée, modification des couleurs, transmission de l'image des contours de l'image captée).

Cependant, dans le cas où un détecteur de malaise, de chute ou d'un autre incident est prévu, l'option de forçage d'appel peut être donné à tout interlocuteur et l'image peut être transmise immédiatement (en éliminant les durées de signal sonore et d'échange de signaux audios) et sans dégradation, dès qu'un malaise, une chute ou un autre incident est détecté. L'étape 1320 est précédée par une étape 1317 de détermination si un événement prédéterminé est détecté par le boîtier 105 et, si oui, une étape d'échanges vidéos normaux est automatiquement déclenchée.

De plus, dans le cas où un détecteur de malaise, de chute ou d'un autre incident est prévu, le boîtier 105 peut provoquer l'appel d'au moins un contact prédéterminé dès qu'un malaise, une chute ou un autre incident est détecté.

On observe que la détection de chute peut être effectuée par traitement d'image, de signaux d'un accéléromètre ou un autre capteur porté par l'utilisateur ou de signaux de voix, ou par détection de pression prolongée sur un bouton quelconque de la télécommande.

Préférentiellement, la durée d'une communication est limitée à une durée prédéterminée (par exemple de trois heures) pour réduire la consommation de bande passante.

On note que, préférentiellement, toutes ces fonctionnalités sont réalisées à partir d'un site internet et d'une interface en flash.

### a) Les photos

Les photos sont envoyées via un script php qui permet de les uploader sur le serveur apache2. Les enregistrements des photos sont insérés dans la table photo de la base de données. Le serveur FMS prévient le destinataire des photos pour lui dire qu'il en a reçu.

### b) Les messages vidéo

Les messages vidéo sont enregistrés via le serveur FMS, une fois le Stream enregistré, un script PHP insert le message dans la base de données et le serveur FMS prévient le destinataire qui affiche le message.

### c) Les messages écrits

Les messages écrits sont envoyés via le serveur FMS.

### d) Les jeux

Les données des jeux sont stockées dans des fichiers XML sur le serveur Apache2

### e) La visiocommunication

Pour effectuer un appel, un appelant authentifié effectue un « call » (requête) sur le serveur FMS qui vérifie que l'appelé est dans la liste de contacts, puis, si cette vérification est positive, il effectue un « call » sur l'appelé. L'appelé reçoit un événement. Si l'appelé accepte l'appel, une réponse est envoyée à l'appelant via le serveur FMS. Puis le serveur FMS se charge de gérer les flux d'images.

Pour les modules supplémentaires le principe de fonctionnement du boîtier 105 est identique, que le module soit à vocation télésurveillance ou médicale. Le boîtier 105 est muni de capteurs qui envoient des relevés sur un serveur de surveillance (voir figure 12). Ce serveur analyse, par le biais d'une routine, les relevés au fur et à mesure de leurs arrivées.

En cas de valeurs « anormales », le serveur de surveillance déclenche une alerte auprès d'une plateforme de conseillers qui prend contact avec l'utilisateur du boîtier 105. En fonction du type de résultat, la plateforme peut décider de passer son appel avec forçage de prise d'appel. Les appels sont passés par la plateforme via un canal SIP.

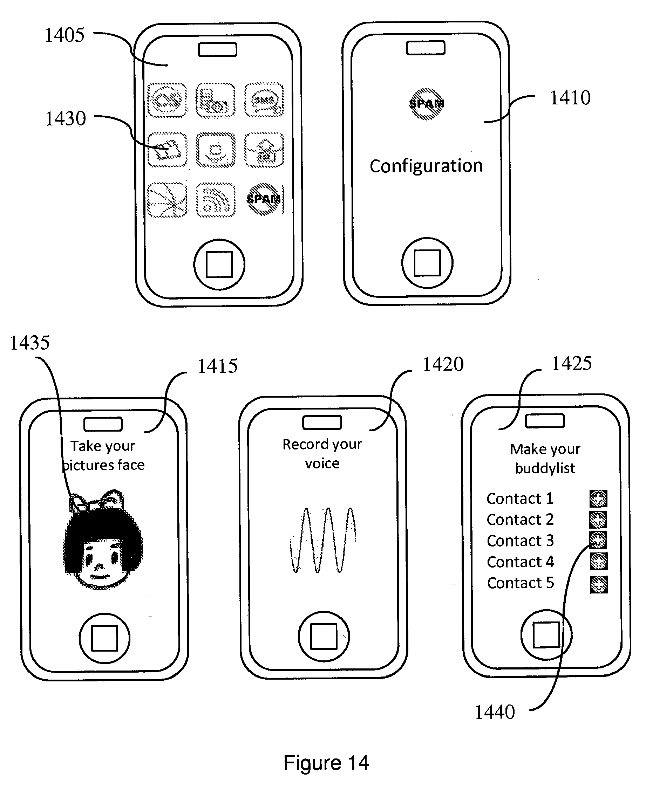

On observe, en figure 14 des interfaces utilisateurs 1405 à 1425 pour smartphone, pour qu'un utilisateur appelé fournisse un média représentant un caractère physique le représentant, non déformé. L'interface 1405 est affichée à l'utilisateur, qui sera l'utilisateur « appelé », lorsqu'il s'abonne au service de mise en oeuvre de la présente invention. Avec l'interface 1405, l'utilisateur sélectionne un icône 1430 représentant le service considéré. L'interface 1410 est alors affichée et indique l'utilisateur va réaliser la configuration du service. L'interface suivante, 1415, invite l'utilisateur à prendre une photo de son visage avec l'appareil photo intégré au smartphone, puis lui présente la photo réalisée pour que l'utilisateur la valide comme média non déformé permettant sa reconnaissance par des utilisateurs appelants qui le connaissent. L'utilisateur peut faire autant d'essais successifs qu'il le souhaite jusqu'à ce qu'il valide ce média visuel. Une fois ce média validé, l'interface suivante, 1420, invite l'utilisateur à enregistrer un message avec sa voix, puis lui fait entendre le message enregistré pour que l'utilisateur le valide comme média non déformé permettant sa reconnaissance par des utilisateurs appelants qui le connaissent. L'utilisateur peut faire autant d'essais successifs qu'il le souhaite jusqu'à ce qu'il valide ce média audio.

Une fois validés les médias permettant sa reconnaissance, l'utilisateur visualise l'interface 1425 qui lui permet d'indiquer des identifiants d'appelants autorisés sans reconnaissance préalable ou jamais autorisés et ne bénéficiant donc pas de la reconnaissance préalable et/ou de l'accès à la messagerie. Ces identifiants peuvent être des numéros de téléphone, des adresses de courriels, par exemple.

L'abonné « appelé » exécute ainsi une application de « biométrie de l'appelé » avec son smartphone. En variante, le média visuel peut être une séquence vidéo.

L'utilisateur destiné à être appelé effectue ainsi une étape de configuration de la sécurité par l'appelé au moyen d'un site internet ou d'une application dédiée. L'utilisateur appelé peut autoriser tout ou partie de ses contacts mémorisés dans son téléphone mobile, dans son ordinateur ou sur serveur d'un opérateur, depuis son interface de configuration du service.

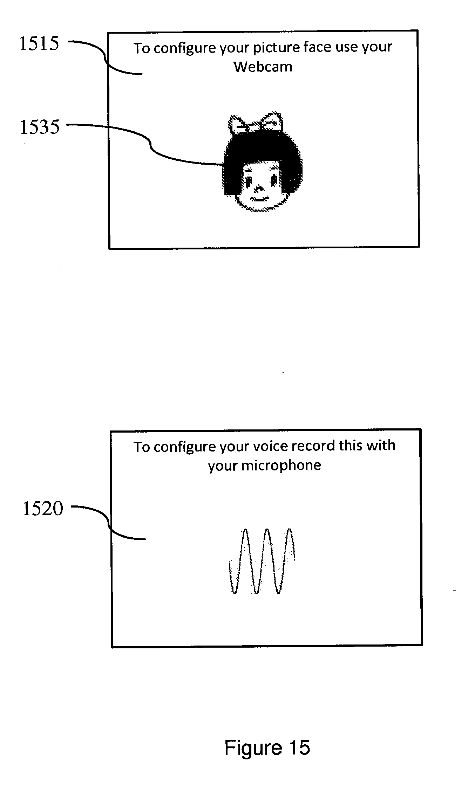

On observe, en figure 15, des interfaces utilisateurs 1515 et 1520 pour ordinateur, box (avec affichage sur un écran de télévision) ou borne, pour qu'un utilisateur appelé fournisse un média visuel, en prenant une photo avec un appareil photo externe ou avec une caméra de la toile (ou « webcam ») et un média audio, avec le microphone intégré au système, qui représentent un caractère physique de l'utilisateur « appelé », non déformé. De la même manière qu'illustré en figure 14, l'utilisateur peut aussi importer ou saisir des identifiants ou contacts de personnes autorisées à communiquer avec lui sans vérification de reconnaissance physique de l'appelé.

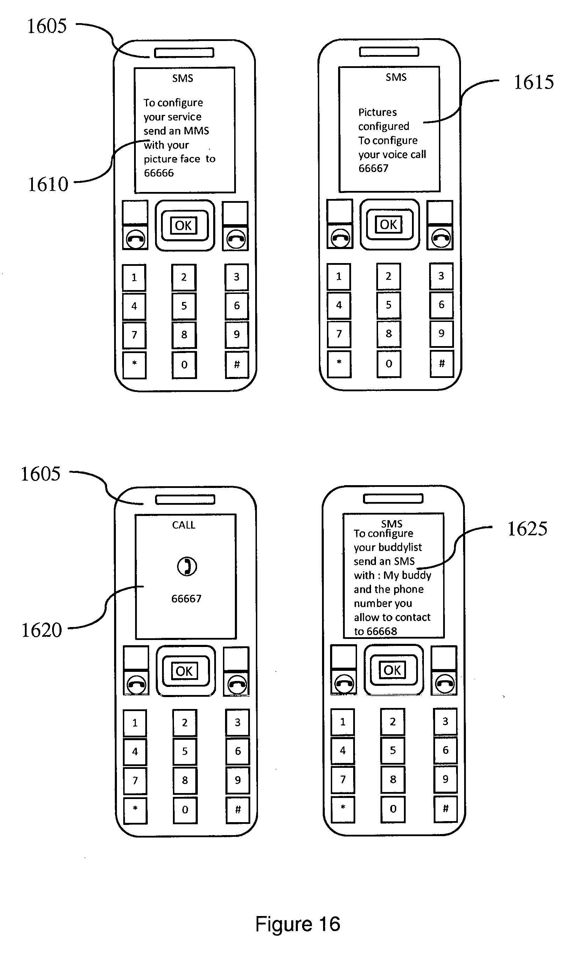

On observe, en figure 16, des interfaces, 1610 à 1625 pour téléphone ou smartphone 1605 pour qu'un utilisateur fournisse des valeurs de paramètres au service. Avec l'interface 1610, l'utilisateur est invité à prendre sa photo avec l'appareil photo intégré au téléphone et à l'envoyer par MMS (message court multimédia) à un numéro de téléphone prédéterminé (ici, le 66667). L'interface 1615 confirme la bonne configuration. Avec l'interface 1620, l'utilisateur est invité à enregistrer sa voix avec le microphone intégré au téléphone mobile puis à l'envoyer à un numéro de téléphone prédéterminé. Avec l'interface 1625, l'utilisateur est invité à envoyer les identifiants de contacts qui n'utiliseront pas le service de reconnaissance ou ceux qui devront l'utiliser.

Dans chacun des modes de réalisation décrits, notamment en regard des figures 14 à 16, préférentiellement :
- au moins un média est une image fixe non déformée après la capture de ladite image, ladite image représentant le visage de l'utilisateur appelé et/ou un objet habituel de son environnement,
- au moins un dit média est une séquence vidéo non déformée après la capture de ladite séquence, ladite séquence représentant le visage de l'utilisateur appelé et/ou un objet habituel de son environnement et/ou
- au moins un dit média est un média audio représentant la voix de l'utilisateur appelé, non déformée après la capture de ladite voix.

On note que le terme de « non déformé » ne tient pas compte des déformations dues à la numérisation ou à la compression des données du média ou à sa restitution sur le moyen d'appel de l'utilisateur appelant.

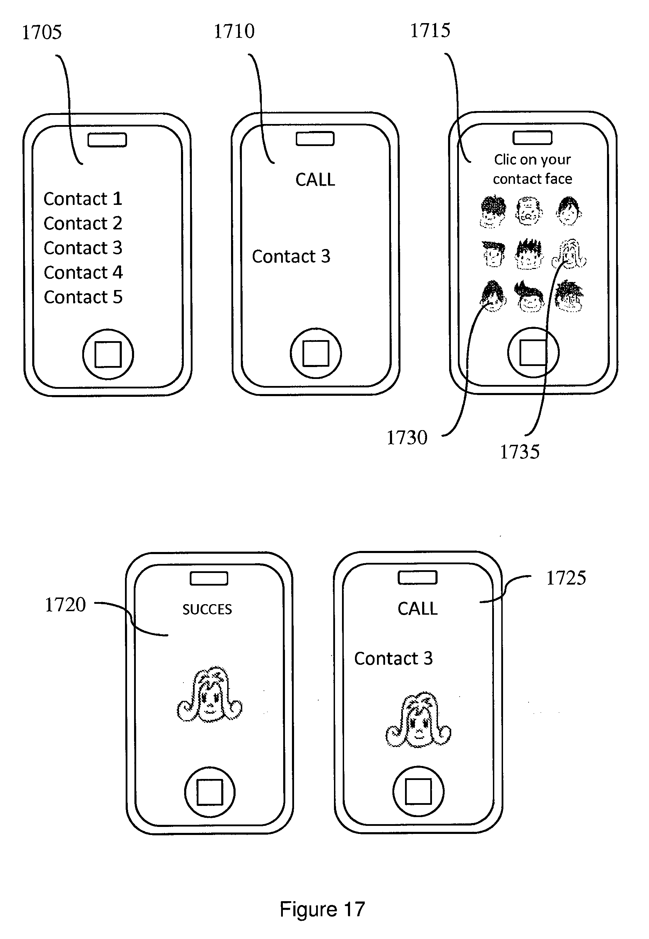

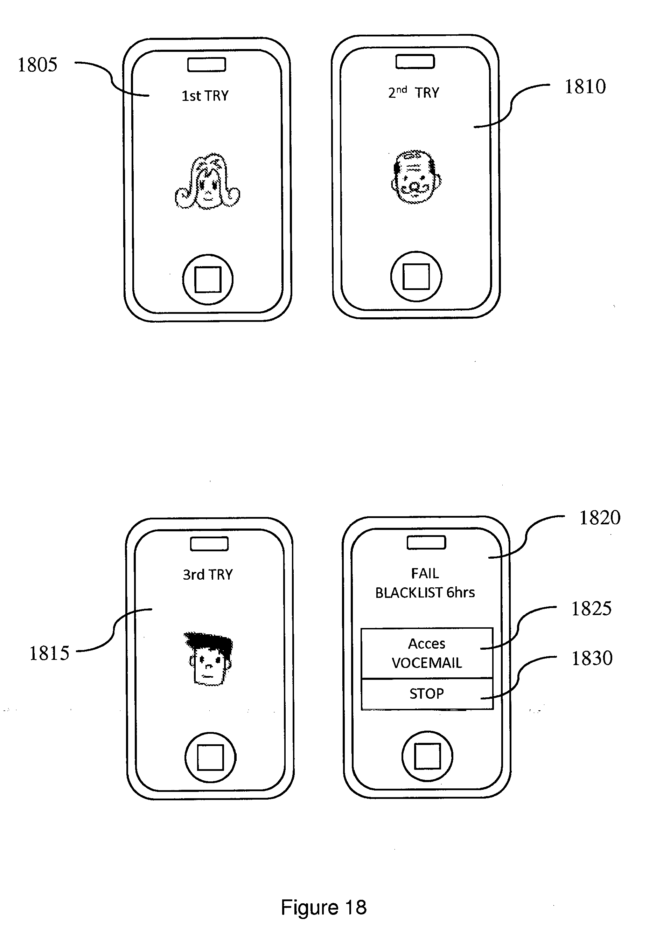

Dans les figures 14 à 16, on a envisagé le cas où l'utilisateur ne fournit qu'un seul média de chaque type, visuel et audio. Cependant, préférentiellement, on demande à l'utilisateur appelé de fournir une pluralité de médias de chaque type, afin de faire varier le média soumis à l'utilisateur appelant, entre les appels successifs, notamment en cas d'échec de reconnaissance lors de trois essais de reconnaissance (voir figure 18). Pour simplifier, en regard des figures 17 à 19, on n'envisage que l'utilisateur appelé n'a fourni qu'un média de chaque type.

Les figures 17 à 19 représentent des interfaces susceptibles d'être vues par l'utilisateur appelant, lorsqu'il tente de le joindre par téléphone. A l'interface 1705, l'utilisateur appelant choisit un contact. Après sélection, ici du contact no. 3, l'utilisateur lance l'appel. Le service de reconnaissance lui transmet, en réponse, neuf images 1730 représentant des visages, non déformés, dont l'une, 1735 est la photographie fournie par l'utilisateur appelé, des autres médias de cette pluralité de médias ayant une forme similaire au média représentatif de l'utilisateur appelé. Par exemple, si le média 1735 est un média non déformé, d'autres médias (préférentiellement tous les autres médias) sont aussi non déformés. Si le média 1735 est une photographie couleur, préférentiellement, les autres médias le sont aussi.

L'interface 1715 invite l'utilisateur appelant à sélectionner, par exemple avec un écran tactile, un dispositif de pointage intégré à un clavier ou les touches d'un clavier, la photographie de l'utilisateur appelé. Si l'utilisateur sélectionne la photographie 1735, l'interface 1720 lui indique que le choix est correct puis l'interface 1725 que l'appel est en cours de manière connue, le téléphone de l'appelé sonnant.

On observe, en figure 18, qu'en cas d'échec de la reconnaissance, interface 1805, deux nouvelles tentatives sont autorisées (le nombre de trois tentatives peut être paramétré par construction ou par l'utilisateur appelé), interfaces 1810 et 1815. Après trois échecs, l'interface 1820 s'affiche à l'utilisateur appelant et comporte une indication 1825 de la possibilité d'enregistrer un message et une indication d'arrêt possible. Après trois échecs, l'utilisateur appelant n'est pas autorisé à réessayer de joindre le même numéro d'utilisateur appelé, au moins pendant une durée prédéterminée, par exemple de six heures.

Pour la configuration de l'interface 1715 qui apparaît lors d'une nouvelle tentative de joindre l'appelé, plusieurs variantes sont possibles :
- dans des variantes, les mêmes photographies que lors de la tentative précédente sont affichées. On évite ainsi que l'appelant ne puisse repérer la seule photographie qui ne changerait pas d'une tentative à l'autre et qui serait, nécessairement, celle de l'utilisateur appelé ;
- dans des variantes, seules les photographies déjà sélectionnées par l'utilisateur appelant lors de tentatives précédentes sont remplacées. On évite ainsi qu'il fasse un apprentissage progressif de la bonne réponse, en mémorisant les photographies déjà sélectionnées et
- dans des variantes, l'utilisateur appelé ayant fourni plusieurs photographies, on change sa photographie ainsi que tout ou partie des autres photographies.

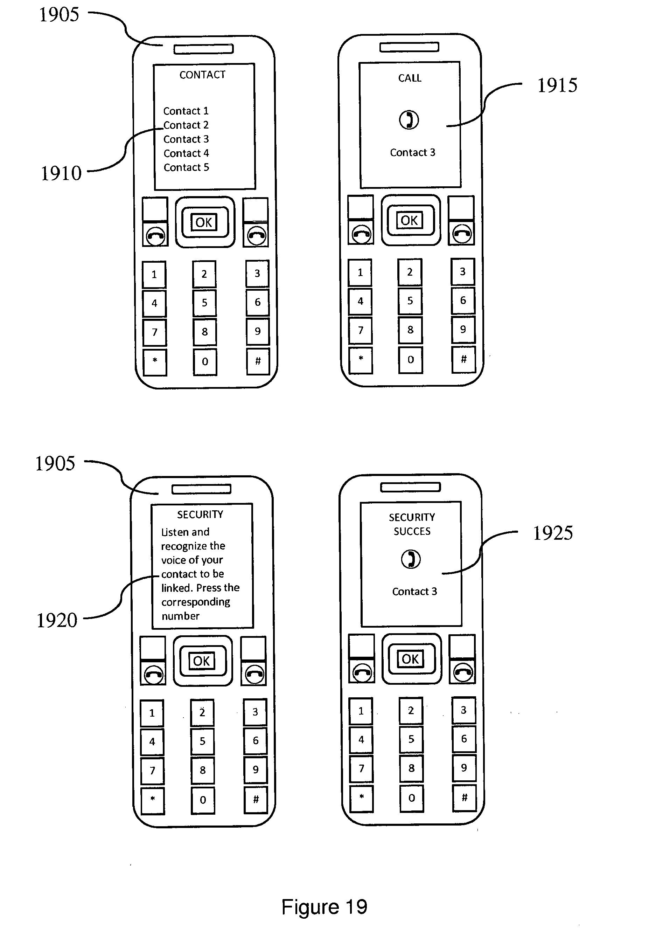

La figure 19 illustre le cas des téléphones 1905 qui ne peuvent afficher des photographies. Dans ce cas, après une interface 1910 permet à l'appelant de sélectionner un numéro d'appelé et une interface 1915 de lancement de l'appel, l'interface 1920 invite l'appelant à entendre une pluralité de messages vocaux dont l'un est un message laissé par l'utilisateur appelé et que l'appelant doit reconnaître en le sélectionnant par son numéro dans la séquence de messages par la saisie au clavier de ce numéro. En cas de succès, l'interface 1925 indique que l'appel se poursuit de manière connue. En cas d'échec, comme indiqué ci-dessus pour les médias visuels, l'utilisateur appelant peut faire d'autres essais, si le paramétrage du service le permet. Une fois le nombre maximum d'essais atteint sans que l'utilisateur appelant n'ai reconnu la voix de l'utilisateur appelé, l'utilisateur appelant peut laisser un message sur la messagerie de l'utilisateur appelé et n'ai plus autorisé, au moins pendant une durée prédéterminée, à joindre l'utilisateur appelé.

En variante, lorsque l'utilisateur appelant a échoué à reconnaître visuellement l'utilisateur appelant pendant plusieurs essais et a donc dû attendre une durée déterminée avant d'essayer de nouveau de joindre l'utilisateur appelé, lors de la tentative ultérieure, il lui est demandé de le reconnaître avec le média audio. Ainsi, l'utilisateur appelant ne peut tirer aucun enseignement de sa précédente tentative d'appel et la sécurité de l'utilisateur appelé contre les appels non sollicités est renforcée.

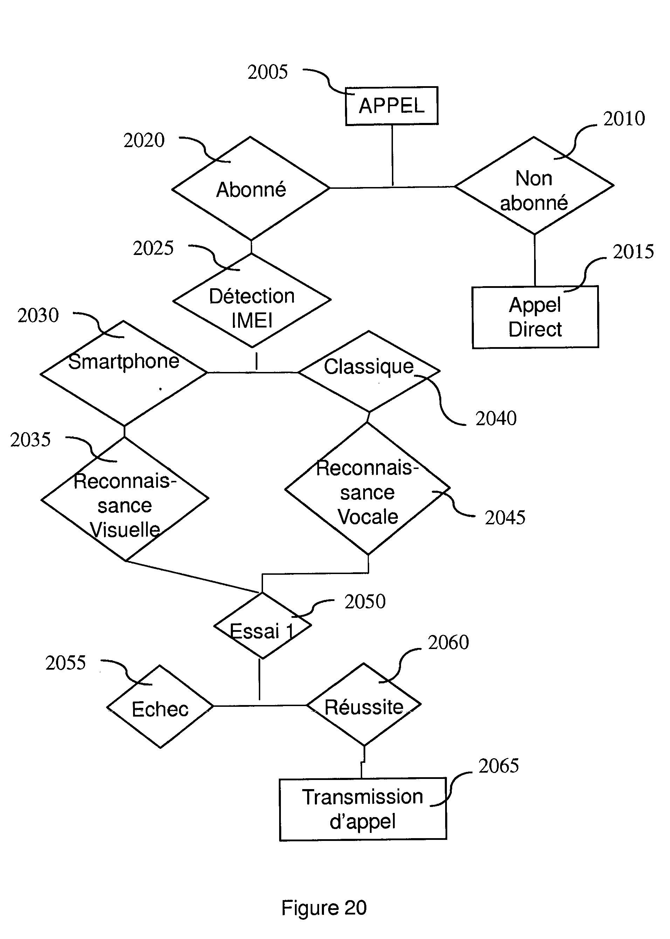

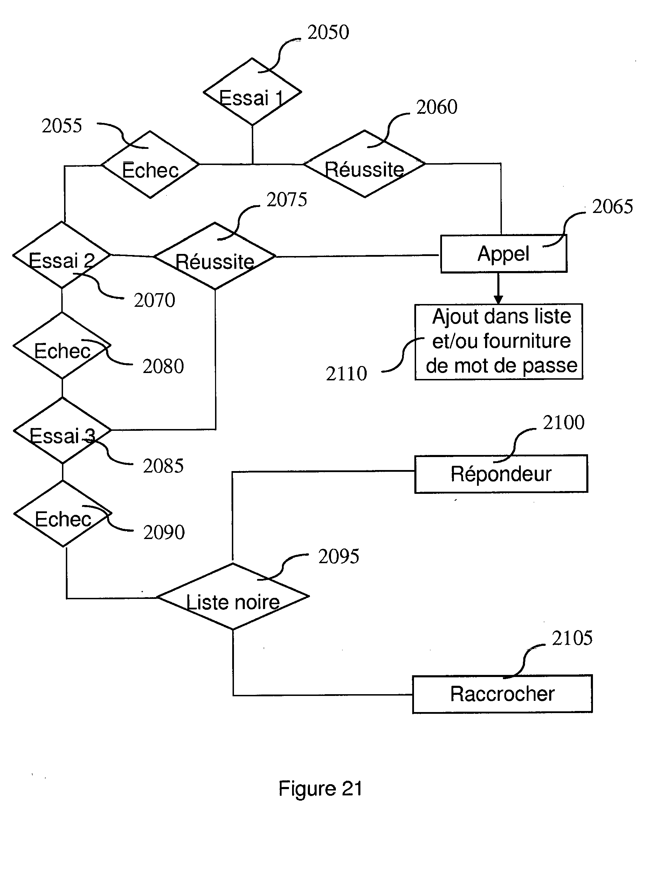

Comme illustré en figures 20 et 21, pour l'utilisateur appelant, on commence par détecter qu'il effectue un appel, au cours d'une étape 2005. Si le numéro de l'appelé ne correspond pas au service de reconnaissance préliminaire de l'appelé par l'appelant, détecté au cours d'une étape 2010, on poursuit l'appel de manière connue dans l'art antérieur au cours d'une étape 2015. La détection de la souscription au service est effectuée par l'opérateur de télécommunication de l'utilisateur appelé.

En variante, c'est une application dédiée implantée sur le téléphone de l'utilisateur appelé qui réalise l'ensemble des étapes exposées ci-dessous.

Si le numéro de l'appelé correspond au service de reconnaissance préliminaire de l'appelé par l'appelant, ce qui est détecté au cours d'une étape 2020, on détecte le type de téléphone utilisé par l'utilisateur appelant en fonction de l'IMEI de son téléphone, au cours d'une étape 2025. L'IMEI (L'International Mobile Equipment Identity, littéralement « identité internationale d'équipement mobile ») est un numéro qui permet d'identifier de manière unique chacun des terminaux de téléphonie mobile. Ce numéro IMEI permet à l'opérateur du réseau d'identifier le mobile appelant et ainsi de l'autoriser ou non à se connecter. Il permet ainsi l'établissement des appels d'urgence sans carte SIM pour certains pays (par exemple le numéro d'urgence européen 112 en Europe). Son rôle le plus connu est de pouvoir bloquer un mobile volé (grey list, black list) auprès de l'ensemble des opérateurs ayant souscrit à la base de données des numéros IMEI). Par défaut, en particulier, si l'IMEI n'est pas disponible, par exemple dans le cas d'un appel depuis un poste fixe, soit on propose à l'utilisateur appelant de choisir entre une reconnaissance visuelle et une reconnaissance audio en lui adressant un message textuel, soit on considère que son téléphone ne permet pas l'affichage de médias visuels.

Si le système utilisé par l'utilisateur appelant ne permet pas d'affichage de médias visuels, étape 2040, on commute sur une reconnaissance audio, étape 2045 et on réalise les étapes expliquées en regard des interfaces 1910 à 1925 au cours des étapes 2050 et suivantes (figures 20 et 21).

Si le système utilisé par l'utilisateur appelant permet l'affichage de médias visuels, étape 2030, on commute sur une reconnaissance visuelle, étape 2035 et on réalise les étapes expliquées en regard des interfaces 1705 à 1820 au cours des étapes 2050 et suivantes.

Au cours de l'étape 2050, on présente à l'utilisateur appelant plusieurs médias dont un média fourni par l'utilisateur appelé et on attend qu'il sélectionne l'un de ces médias. On note que les médias qui ne sont pas celui fourni par l'utilisateur appelé peuvent être tirés aléatoirement parmi les médias fournis par tous les utilisateurs et/ou parmi des médias fournis par des modèles volontaires ou rémunérés pour le faire.

Si ce média est celui fourni par l'utilisateur appelé, étape 2060, au cours d'une étape 2065, l'appel se poursuit de manière connue dans l'art antérieur. Sinon, après l'échec 2055, on effectue un deuxième essai, étapes 2070 (présentation des médias et sélection d'un média), 2075 (succès) et 2080 (échec), similaire au premier. En cas de nouvel échec, étape 2080, on effectue un troisième essai, étapes 2085 (présentation des médias et sélection d'un média), 2075 (succès) et 2090 (échec), similaire au premier. A la suite du troisième échec, étape 2090, on détermine si l'utilisateur est sur une liste de refus d'accès donnée par l'utilisateur appelé au cours de la configuration initiale. Si oui, l'appel est terminé au cours de l'étape 2105. Sinon, au cours d'une étape 2100, l'utilisateur appelant accède directement à la messagerie, vocale ou vidéo, de l'utilisateur appelé.

Lorsqu'un utilisateur appelant a réussi à accéder à l'utilisateur appelé, ce dernier peut prévoir que l'identifiant de son téléphone entre automatiquement, au cours d'une étape 2110, dans la liste des numéros autorisés, sauf s'il modifie les paramètres de fonctionnement du service. Ainsi, l'utilisateur appelant qui serait une connaissance de l'utilisateur appelé mais aurait été oublié dans la liste des personnes autorisées, se trouverait automatiquement ajouté à cette liste après avoir reconnu l'utilisateur appelé par l'une de ses caractéristiques physiques. En variante, au cours de l'étape 2110, un mot de passe est fourni à l'utilisateur appelant, de manière vocale et ce mot de passe permet à l'utilisateur appelant de passer un appel sans reconnaissance préalable de l'appelé.

De même, en variante, le procédé met en oeuvre une étape automatique, après l'écoute ou la visualisation, par l'utilisateur appelé, de chaque message laissé par un utilisateur appelant au cours d'une étape 2100, de demande d'acceptation de cet appelant dans la liste des personnes autorisées. Ainsi, une personne à laquelle l'utilisateur appelé aurait laissé son numéro de téléphone sans que l'utilisateur appelant mémorise ses caractéristiques physiques pourrait être ultérieurement libérée de l'obligation de reconnaître l'utilisateur appelé.

Le procédé comporte aussi, en variante, l'ajout dans la liste des personnes autorisées de tous les numéros de téléphones composés par l'utilisateur dit « appelé » (même si, lors de cette étape particulièrement, c'est lui qui appelle l'autre utilisateur). Ainsi, lorsque l'utilisateur dit « appelé » a joint ou essayé de joindre un correspondant, ce correspondant est automatiquement autorisé à le rappeler sans reconnaissance préalable d'une caractéristique physique de l'utilisateur appelant.

Bien entendu, l'utilisateur appelé peut, à tout moment reconfigurer le service pour retirer une autorisation à un autre utilisateur ou même le placer en liste d'appels refusés.

On note que la mise en oeuvre de la présente invention limite aussi les appels faits par erreur lorsqu'un clavier de téléphone n'est pas verrouillé.

On note que, dans des modes de réalisation, ce qui a été indiqué, ci-dessus, en ce qui concerne les caractéristiques physiques de l'appelé peut s'étendre à des caractéristiques physiques d'un objet personnel de l'appelé ou d'un lieu de vie ou de travail de l'appelé. Ainsi, l'appelé pourra être invité à photographier un objet qui l'entoure, aisément reconnaissable par ses proches, son lieu de travail, une pièce de son habitation ou l'apparence externe de son habitation. Toutes ces caractéristiques physiques ne demandent aucune mémorisation volontaire spécifique mais sont automatiquement reconnues par un visiteur de l'appelé.

Tout ce qui a été exposé ci-dessus dans le cas des appels téléphoniques s'applique aussi au cas des courriels, la tentative d'envoi d'un courriel à un destinataire étant l'équivalent de la tentative d'appel téléphonique d'un appelé. Ainsi, lorsque la présente invention est implémentée sur un service de transmission de courriels, l'utilisateur émetteur doit reconnaître un média représentatif d'une caractéristique physique représentative du destinataire pour que ce courriel soit transmis au destinataire.

Ainsi, dans des modes de réalisation, l'utilisateur appelant demande d'effectuer une transmission d'un message à destination d'un utilisateur appelé, par exemple sous la forme d'une mise en communication téléphonique. On présente alors à l'utilisateur appelant une pluralité de médias dont l'un est représentatif d'une caractéristique physique de l'utilisateur appelé ou d'un objet habituel de son environnement, des autres médias de cette pluralité de médias ayant une forme similaire au média représentatif de l'utilisateur appelé. Après que l'utilisateur appelant ait sélectionné un média audiovisuel parmi les médias présentés, on détermine si ce média est celui qui est représentatif de l'utilisateur appelé. Uniquement si oui, on autorise la transmission du message depuis l'utilisateur appelant à l'utilisateur appelé.

Dans des modes de réalisation, si le média sélectionné par l'utilisateur appelant est représentatif de l'utilisateur appelé, on fournit un mot de passe à l'utilisateur appelant. Et chaque étape ultérieure de demande de transmission d'un message comporte une étape de demande d'un mot de passe à l'utilisateur appelant, l'étape de présentation n'étant effectuée que si l'utilisateur appelant ne fournit pas le mot de passe attendu.

Dans des modes de réalisation, si le média sélectionné par l'utilisateur appelant est représentatif de l'utilisateur appelé, on mémorise une adresse unique, par exemple un numéro de téléphone, de l'utilisateur appelant sur un réseau reliant l'utilisateur appelant à l'utilisateur appelé, l'utilisateur appelant pouvant ensuite effectuer des appels de l'utilisateur appelé en mettant en oeuvre ladite adresse unique sans que les étapes de présentation et de sélection ne soient mises en oeuvre.

Dans des modes de réalisation, chaque adresse unique utilisée par l'utilisateur appelé pour joindre un autre utilisateur est mémorisée, l'utilisateur appelant pouvant ensuite effectuer des appels de l'utilisateur appelé en mettant en oeuvre ladite adresse unique sans que les étapes de présentation et de sélection ne soient mises en oeuvre.

Dans des modes de réalisation :
- au moins un média est une image fixe non déformée après la capture de ladite image, ladite image représentant le visage de l'utilisateur appelé et/ou un objet habituel de son environnement,
- au moins un dit média est une séquence vidéo non déformée après la capture de ladite séquence, ladite séquence représentant le visage de l'utilisateur appelé et/ou un objet habituel de son environnement et/ou
- au moins un dit média est un média audio représentant la voix de l'utilisateur appelé, non déformée après la capture de ladite voix.

Dans des modes de réalisation, on conserve, en mémoire, une pluralité de médias représentatifs de l'utilisateur appelé et, au cours de l'étape de présentation, si l'utilisateur appelant n'a pas sélectionné le média représentatif de l'utilisateur appelé au cours de la précédente demande transmission de message, le média représentatif de l'utilisateur appelé est un média différent de celui présenté à l'utilisateur appelant au cours de la précédente demande de transmission de message.

Le serveur mettant en oeuvre les étapes de reconnaissance préalable de l'appelé par l'appelant constitue un dispositif d'autorisation de transmission d'un message qui comporte :
- un moyen de réception de demande de transmission d'un message, depuis un utilisateur appelant à destination d'un utilisateur appelé, par exemple d'appels sur un réseau téléphonique,
- un moyen de transmission à l'utilisateur appelant d'une pluralité de médias dont l'un est représentatif d'une caractéristique physique de l'utilisateur appelé, des autres médias de cette pluralité de médias ayant une forme similaire au média représentatif de l'utilisateur appelé,
- un moyen de réception d'une sélection, par l'utilisateur appelant, d'un média audiovisuel parmi les médias transmis, par exemple sous la forme de signaux DTMF représentant une touche de clavier pressée par l'utilisateur appelant ou une information transmise par le téléphone de l'utilisateur appelant pour représenter une image sélectionnée sur un écran tactile de ce téléphone et
- un moyen de transmission du message depuis l'utilisateur appelant à l'utilisateur appelé, uniquement au cas où le média sélectionné est représentatif de l'utilisateur appelé, par exemple par mise en relation de l'appelant et de l'appareil téléphonique de l'appelé.

## Revendications

1. Procédé d'autorisation de transmission d'un message, qui comporte :
- une étape de sélection, par un utilisateur dit « appelant » d'un identifiant d'un utilisateur dit « appelé »,
- une étape (2005) de demande de transmission d'un message, depuis l'utilisateur appelant à destination de l'utilisateur appelé,
**caractérisé en ce qu'**il comporte, en outre, pour vérifier que l'utilisateur appelant est capable de reconnaître l'utilisateur appelé dont il a sélectionné un identifiant :
- une étape (2035, 2045 à 2060) de présentation à l'utilisateur appelant d'une pluralité de médias (1730, 1735) dont l'un (1735) est représentatif d'une caractéristique physique de l'utilisateur appelé, des autres médias de cette pluralité de médias ayant une forme similaire au média représentatif de l'utilisateur appelé,
- une étape (2050) de sélection, par l'utilisateur appelant, d'un média audiovisuel parmi les médias présentés,
- et, uniquement au cas où le média sélectionné est représentatif de l'utilisateur appelé, une étape (2065) d'autorisation de transmission du message depuis l'utilisateur appelant à l'utilisateur appelé.

2. Procédé selon la revendication 1, dans lequel l'étape de demande de transmission d'un message comporte une étape de demande d'un mot de passe à l'utilisateur appelant, l'étape de présentation n'étant effectuée que si l'utilisateur appelant ne fournit pas le mot de passe attendu.

3. Procédé selon l'une des revendications 1 ou 2, dans lequel, si le média sélectionné par l'utilisateur appelant est représentatif de l'utilisateur appelé, on fournit un mot de passe à l'utilisateur appelant.

4. Procédé selon l'une des revendications 1 à 3, dans lequel, si le média sélectionné par l'utilisateur appelant est représentatif de l'utilisateur appelé, on mémorise une adresse unique de l'utilisateur appelant sur un réseau reliant l'utilisateur appelant à l'utilisateur appelé, l'utilisateur appelant pouvant ensuite effectuer des appels de l'utilisateur appelé en mettant en oeuvre ladite adresse unique sans que les étapes de présentation et de sélection ne soient mises en oeuvre.

5. Procédé selon la revendication 4, dans lequel, chaque adresse unique utilisée par l'utilisateur appelé pour joindre un autre utilisateur est mémorisée, l'utilisateur appelant pouvant ensuite effectuer des appels de l'utilisateur appelé en mettant en oeuvre ladite adresse unique sans que les étapes de présentation et de sélection ne soient mises en oeuvre.

6. Procédé selon l'une des revendications 1 à 5, dans lequel au moins un dit média est une image fixe non déformée après la capture de ladite image, ladite image représentant le visage de l'utilisateur appelé et/ou un objet habituel de son environnement.

7. Procédé selon l'une des revendications 1 à 6, dans lequel au moins un dit média est une séquence vidéo non déformée après la capture de ladite séquence, ladite séquence représentant le visage de l'utilisateur appelé et/ou un objet habituel de son environnement.

8. Procédé selon l'une des revendications 1 à 7, dans lequel au moins un dit média est un média audio représentant la voix de l'utilisateur appelé, non déformée après la capture de ladite voix.

9. Procédé selon l'une des revendications 1 à 8, qui comporte, en outre, une étape (1105, 1110) de fourniture dudit média par l'utilisateur appelé.

10. Procédé selon l'une des revendications 1 à 9, dans lequel on conserve, en mémoire, une pluralité de médias représentatifs de l'utilisateur appelé et, au cours de l'étape de présentation, si l'utilisateur appelant n'a pas sélectionné le média représentatif de l'utilisateur appelé au cours de la précédente demande transmission de message, le média représentatif de l'utilisateur appelé est un média différent de celui présenté à l'utilisateur appelant au cours de la précédente demande de transmission de message.

11. Procédé selon l'une des revendications 1 à 10, qui comporte, en outre, une étape de tirage, au hasard, d'autres médias dans une base de données pour constituer ladite pluralité de médias présentée au cours de l'étape de présentation.

12. Procédé selon l'une des revendications 1 à 11 dans lequel l'étape de transmission d'un message comporte on étape de détection de capacité d'affichage d'images par le moyen d'appel utilisé par l'utilisateur appelant et :
- si le moyen d'appel peut afficher des images, au cours de l'étape de présentation, on présente des médias comportant au moins une image et
- si le moyen d'appel ne peut afficher d'image, au cours de l'étape de présentation, on présente des médias audio.

13. Procédé selon la revendication 12, dans lequel, au cours de l'étape de détection de capacité d'affichage d'images, on met en oeuvre l'IMEI (International Mobile Equipment Identity, ou « identité internationale d'équipement mobile ») du moyen d'appel utilisé par l'utilisateur appelant.

14. Procédé selon l'une des revendications 1 à 13, dans lequel, au cas où l'utilisateur appelant ne sélectionne pas le média représentatif de l'utilisateur appelé après un nombre d'essais successifs prédéterminé, l'utilisateur appelant est mis en relation avec une messagerie de l'utilisateur appelé.

15. Dispositif d'autorisation de transmission d'un message, qui comporte, à distance, sur un réseau, d'un utilisateur appelant :
- un moyen de réception d'un identifiant d'un utilisateur appelé, ledit identifiant ayant été sélectionné par l'utilisateur appelant,
**caractérisé en ce qu'**il comporte, en outre, à distance, sur un réseau, de l'utilisateur appelant, un moyen de vérification que l'utilisateur appelant est capable de reconnaître l'utilisateur appelé dont il a sélectionné un identifiant, qui comporte :
- un moyen de transmission à l'utilisateur appelant d'une pluralité de médias dont l'un est représentatif d'une caractéristique physique de l'utilisateur appelé, des autres médias de cette pluralité de médias ayant une forme similaire au média représentatif de l'utilisateur appelé,
- un moyen de réception d'une sélection, par l'utilisateur appelant, d'un média audiovisuel parmi les médias transmis,
- et un moyen de transmission du message depuis l'utilisateur appelant à l'utilisateur appelé, uniquement au cas où le média sélectionné est représentatif de l'utilisateur appelé.

## Patentansprüche

1. Freigabeverfahren für die Übertragung einer Nachricht, das folgendes umfasst:
- einen Schritt der Auswahl einer Benutzeridentifizierung eines sogenannten "angerufenen" Anwenders durch einen sogenannten "anrufenden" Anwender,
- einen Schritt (2005) des Auftrags zur Übertragung einer Nachricht, vom anrufenden Anwender in Richtung des angerufenen Anwenders,
**dadurch gekennzeichnet, dass** es darüber hinaus folgendes umfasst, um zu prüfen, ob der anrufende Anwender in der Lage ist, den angerufenen Anwender zu erkennen, von dem er eine Benutzeridentifizierung ausgewählt hat:
- einen Schritt (2035, 2045 bis 2060) der Präsentation einer Vielzahl von Medien (1730, 1735) für den anrufenden Anwender, von denen eines (1735) repräsentativ für ein physisches Merkmal des angerufenen Anwenders ist, und weitere Medien aus dieser Vielzahl an Medien eine Form aufweisen, die ähnlich dem repräsentativen Medium des angerufenen Anwenders sind,
- einen Schritt (2050) der Auswahl eines audiovisuellen Mediums unter den präsentierten Medien durch den anrufenden Anwender,
- und, nur für den Fall, dass das ausgewählte Medium repräsentativ für den angerufenen Anwender ist, einen Schritt (2065) zur Freigabe der Übertragung der Nachricht vom anrufenden Anwender zum angerufenen Anwender.

2. Verfahren nach Anspruch 1, bei dem der Schritt des Auftrags zur Übertragung einer Nachricht einen Schritt der Abfrage eines Kennworts an den anrufenden Anwender umfasst, wobei der Schritt der Präsentation nur dann ausgeführt wird, wenn der anrufende Anwender nicht das erwartete Kennwort beisteuert.

3. Verfahren nach einem der Ansprüche 1 oder 2, bei dem man dem anrufenden Anwender, wenn das vom anrufenden Anwender ausgewählte Medium repräsentativ für den angerufenen Anwender ist, ein Kennwort beistellt.

4. Verfahren nach einem der Ansprüche 1 bis 3, bei dem man, wenn das vom anrufenden Anwender ausgewählte Medium repräsentativ für den angerufenen Anwender ist, eine eindeutige Adresse des anrufenden Anwenders in einem Netzwerk speichert, das den anrufenden Anwender mit dem angerufenen Anwender verbindet, und der anrufende Anwender danach Anrufe des angerufenen Anwenders durchführen kann, indem er die besagte einzige Adresse anwendet, ohne dass die Schritte der Präsentation und der Auswahl angewandt werden.

5. Verfahren nach Anspruch 4, bei dem jede eindeutige, vom angerufenen Anwender verwendete Adresse zum Kontaktieren eines anderen Anwenders gespeichert wird, und der anrufende Anwender danach Anrufe des angerufenen Anwenders durchführen kann, indem er die besagte eindeutige Adresse anwendet, ohne dass die Schritte der Präsentation und der Auswahl angewandt werden.

6. Verfahren nach einem der Ansprüche 1 bis 5, bei dem zumindest ein besagtes Medium ein festes und nach Erfassung des besagten Bildes unverformtes Bild ist, und das besagte Bild das Gesicht des angerufenen Anwenders und/oder einen gewohnten Gegenstand aus dessen Umfeld darstellt.

7. Verfahren nach einem der Ansprüche 1 bis 6, bei dem ein besagtes Medium eine Videosequenz ist, die nach Erfassung der besagten Sequenz nicht verformt wurde, und die besagte Sequenz das Gesicht des angerufenen Anwenders und/oder einen gewohnten Gegenstand aus dessen Umfeld darstellt.

8. Verfahren nach einem der Ansprüche 1 bis 7, bei dem zumindest ein besagtes Medium ein Audio-Medium ist, das die Stimme des angerufenen Anwenders darstellt, die nach der Erfassung der besagten Stimme nicht verformt wurde.

9. Verfahren nach einem der Ansprüche 1 bis 8, das darüber hinaus einen Schritt (1105, 1110) zur Beistellung des besagten Mediums durch den angerufenen Anwender umfasst.

10. Verfahren nach einem der Ansprüche 1 bis 9, bei dem man eine Vielzahl von repräsentativen Medien des angerufenen Anwenders im Speicher behält, und, wenn der anrufende Anwender im Laufe des Präsentationsschrittes beim vorherigen Auftrag zur Übertragung der Nachricht nicht das für den angerufenen Anwender repräsentative Medium ausgewählt hat, das für den angerufenen Anwender repräsentative Medium ein Medium ist, das sich von jenem unterscheidet, das dem anrufenden Anwender beim vorherigen Auftrag zur Übertragung der Nachricht präsentiert worden ist.

11. Verfahren nach einem der Ansprüche 1 bis 10, das darüber hinaus einen Schritt einer Auslosung anderer Medien aus einer Datenbank umfasst, um die besagte Vielzahl von Medien zu bilden, die im Laufe des Präsentationsschrittes präsentiert werden.

12. Verfahren nach einem der Ansprüche 1 bis 11, bei dem der Schritt der Übertragung einer Nachricht einen Schritt zur Erfassung der Anzeigekapazität an Bildern durch das Anrufgerät umfasst, das vom anrufenden Anwender verwendet wird, und:
- falls das Anrufgerät Bilder anzeigen kann, man im Laufe des Präsentationsschrittes Medien präsentiert, die zumindest ein Bild enthalten, und
- falls das Anrufgerät keine Bilder anzeigen kann, man im Laufe des Präsentationsschrittes Audiomedien präsentiert.

13. Verfahren nach Anspruch 12, bei dem man im Laufe des Schrittes zur Erfassung der Anzeigekapazität an Bildern die IMEI (International Mobile Equipment Identity, oder "Internationale Seriennummer des Endgeräts) des Anrufgeräts anwendet, das vom anrufenden Anwender verwendet wird.

14. Verfahren nach einem der Ansprüche 1 bis 13, bei dem der anrufende Anwender für den Fall, dass der anrufende Anwender nach einer vorbestimmten Anzahl an Versuchen nicht das für den angerufenen Anwender repräsentative Medium auswählt, mit einem Anrufbeantworter des angerufenen Anwenders verbunden wird.

15. Freigabevorrichtung für die Übertragung einer Nachricht, die auf Distanz, in einem Netzwerk, folgendes von einem anrufenden Anwender enthält:
- ein Mittel zum Empfang einer Benutzeridentifizierung eines angerufenen Anwenders, wobei die besagte Benutzeridentifizierung vom anrufenden Anwender ausgewählt worden ist,
**dadurch gekennzeichnet, dass** sie darüber hinaus auf Distanz, in einem Netzwerk des anrufenden Anwenders ein Mittel zur Überprüfung enthält, dass der anrufende Anwender in der Lage ist, den angerufenen Anwender zu erkennen, dessen Benutzeridentifizierung er ausgewählt hat, die folgendes enthält:
- ein Mittel zur Übertragung an den anrufenden Anwender einer Vielzahl von Medien, von denen eines repräsentativ für ein physisches Merkmal des angerufenen Anwenders ist, und andere Medien aus dieser Vielzahl von Medien eine Form aufweisen, die dem repräsentativen Medium des angerufenen Anwenders ähnelt,
- ein Mittel zum Empfang einer Auswahl eines audiovisuellen Mediums durch den anrufenden Anwender unter den übertragenen Medien,
- und ein Mittel zur Übertragung der Nachricht vom anrufenden Anwender an den angerufenen Anwender, lediglich für den Fall, dass das ausgewählte Medium repräsentativ für den angerufenen Anwender ist.

## Claims

1. Method of authorizing the transmission of a message, which comprises:
- a step in which a user called "calling party" selects an identifier of a user call "called party";
- a step (2005) of requesting the transmission of a message from the calling party to the called party;
**characterized in that** it also comprises, to verify that the calling party is able to recognize the called party one of whose identifiers they have selected:
- a step (2035, 2045 to 2060) of presenting a plurality of media elements (1730, 1735) to the calling party, one of which (1735) is representative of a physical characteristic of the called party, where the other media in this plurality of media elements are similar in form to the media element representative of the called party;
- a step (2050) in which the calling party selects an audiovisual media element from the presented media elements;
- and a step (2065) of authorizing the transmission of the message from the calling party to the called party, only in the case where the selected media element is representative of the called party.

2. Method according to claim 1, wherein the step of requesting a message to be transmitted comprises a step of requesting a password from the calling party; the presentation step is only performed if the calling party does not supply the expected password.

3. Method according to one of claims 1 or 2, wherein, if the medium selected by the calling party represents the called party, a password is supplied to the calling party.

4. Method according to one of claims 1 to 3, wherein, if the medium selected by the calling party is representative of the called party, an identifier of the calling party over a network that connects the calling party and the called party is stored; the calling party can then make calls to the called party by utilizing said unique address, without the presentation and selection steps being utilized.

5. Method according to claim 4, wherein, each unique address used by the called party to reach another user is stored, the calling party can then make calls to the called party by utilizing said unique address without having the presentation and selection steps being utilized.

6. Method according to one of claims 1 to 5, wherein at least one said media element is a fixed image, undistorted following said image's capture, said image representing the called party's face and/or an object that is a regular part of their surroundings.

7. Method according to one of claims 1 to 6, wherein at least one said media element is a video sequence, undistorted following said sequence's capture, said sequence representing the called party's face and/or an object that is a regular part of their surroundings.

8. Method according to one of claims 1 to 7, wherein at least one said media element is an audio media element representing the called party's voice, undistorted following the capture of said voice.

9. Method according to one of claims 1 to 8, which also comprises a step (1105, 1110) of providing said media element by the called party.

10. Method according to one of claims 1 to 9, wherein a plurality of media elements representative of the called party are kept in memory and, during the presentation step, if the calling party has not selected the media element representing the called party in the previous message transmission request, the media element representing the called party is a different media element from that presented to the calling party at the time of the previous message transmission request.

11. Method according to one of claims 1 to 10, which comprises in addition a step of picking random other media elements from a database to constitute said plurality of media elements to be presented during the presentation step.

12. Method according to one of claims 1 to 11, wherein the message transmission step comprises a step of detecting the image display capability of the calling means used by the calling party and:
- if the calling means can display images, media elements comprising at least one image are presented during the presentation step and
- if the calling means cannot display images, audio media elements are presented during the presentation step.

13. Method according to claim 12, wherein, during the step of detecting the image display capability, the IMEI (International Mobile Equipment Identity) of the calling means used by the calling party is utilized.

14. Method according to one of claims 1 to 13, wherein, where the calling party does not select the media element representing the called party after a predefined number of consecutive attempts, the calling party is connected to a voicemail of the called party.

15. Device for authorizing the transmission of a calling party's message, which comprises, remotely, over a network:
- a means of receiving an identifier of a called party, said identifier having been selected by the calling party,
**characterized in that** it also comprises, remotely, over a network, from the calling party, a means of verifying that the calling party is able to recognize the called party whose identifier they have selected, which comprises:
- a means of transmitting a plurality of media elements to the calling party, one of which is representative of a physical characteristic of the called party, where the other media elements in this plurality of media elements are similar in form to the media element representative of the called party;
- a means of receiving a selection by the calling party of an audiovisual media element among the transmitted media elements;
- and a means of transmitting the message from the calling party to the called party, only in the case where the selected media element is representative of the called party.
